(19) Europäisches Patentamt
European Patent Office
Office européen des brevets

(11) EP 2 093 700 A2

(12) # EUROPEAN PATENT APPLICATION

(43) Date of publication:
**26.08.2009 Bulletin 2009/35**

(51) Int Cl.:
***G06K 9/72*** *(2006.01)* ***G06K 9/20*** *(2006.01)*

(21) Application number: **09002440.7**

(22) Date of filing: **20.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.02.2008 JP 2008039137**
**25.12.2008 JP 2008330845**

(71) Applicant: **Kabushiki Kaisha Toshiba**
**Minato-ku,**
**Tokyo 105-8001 (JP)**

(72) Inventors:
- **Hamamura, Tomoyuki**
**c/o Toshiba Corporation**
**Tokyo 105-8001 (JP)**
- **Irie, Bunpei**
**c/o Toshiba Corporation**
**Tokyo 105-8001 (JP)**
- **Natori, Naotake**
**c/o Toshiba Corporation**
**Tokyo 105-8001 (JP)**
- **Akagi, Takuma**
**c/o Toshiba Corporation**
**Tokyo 105-8001 (JP)**

(74) Representative: **Kramer - Barske - Schmidtchen**
**European Patent Attorneys**
**Landsberger Strasse 300**
**80687 München (DE)**

(54) **Pattern recognition method, and storage medium which stores pattern recognition program**

(57) A pattern recognition method is applied to processing of causing an information processing apparatus to recognize a pattern in a plurality of steps. The information processing apparatus detects recognition candidates which can be recognition candidates of each step (S11). The information processing apparatus expands the recognition candidates of the next step belonging to each detected recognition candidate of each step (S15). The information processing apparatus calculates the evaluation value of each expanded recognition candidate based on an a posteriori probability on condition of all recognition processing results for a recognition candidate which has undergone recognition processing (S16). The information processing apparatus selects recognition candidates based on the calculated evaluation value of each recognition candidate (S18). The information processing apparatus determines a recognition result based on the selected recognition candidates (S21).

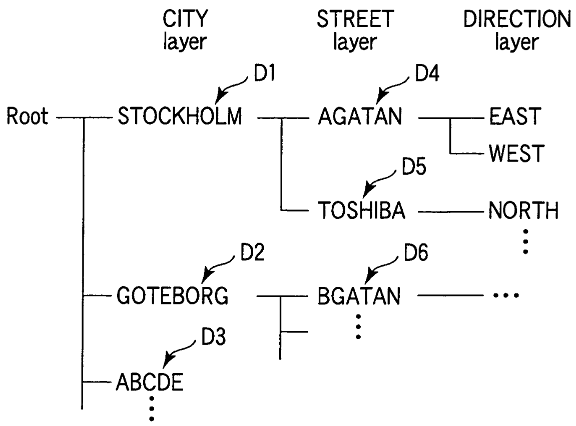


F I G. 10



Printed by Jouve, 75001 PARIS (FR)

## Description

The present invention relates to a pattern recognition method and a character recognition method used in a character recognition apparatus for recognizing a character written on a target reading object or a biometrical collation apparatus for recognizing a person based on biometrical information, and a storage medium which stores programs for executing these methods.

Various pattern recognition methods have been proposed conventionally. For example, Jpn. Pat. Appln. KOKAI Publication No. 2004-178280 or 2001-283156 discloses a pattern recognition method for address information having a hierarchical structure.

Jpn. Pat. Appln. KOKAI Publication No. 2004-178280 discloses a method which uses, as evaluation values, the sums of reliabilities of words for recognition result candidates in a given layer. Only recognition result candidates having evaluation values at first to Eth ranking places are left, and the remaining candidates are discarded.

Jpn. Pat. Appln. KOKAI Publication No. 2001-283156 discloses a method which discards recognition result candidates in each of which the ratio of unrecognized characters with respect to the word length has a predetermined value or more.

"IEEE Trans. Pattern Analysis and Machine Intelligence, vol. 11, no. 1, pp. 68-83, Jan. 1989" discloses a method which uses, as an evaluation value, a value obtained by dividing an a posteriori probability by an a priori probability, and sets a candidate having a maximum evaluation value as the next search target. Note that an a posteriori probability is represented by $P(c|x)$. The a posteriori probability $P(c|x)$ is defined as the probability that a candidate c will be correct on condition of an output x obtained by recognition processing. An a priori probability is represented by $P(c)$. The a priori probability $P(c)$ is defined as the probability that the candidate c will be correct before recognition processing.

However, the method disclosed in Jpn. Pat. Appln. KOKAI Publication No. 2004-178280 sometimes erroneously discards a correct candidate. This is because the recognition result candidates are rearranged using the evaluation values based on the sums of reliabilities of words.

The method disclosed in Jpn. Pat. Appln. KOKAI Publication No. 2001-283156 is sometimes unrealistic in actual operation. This is because when recognition processing for each recognition target pattern is complex and specific, a search is performed for all undiscarded recognition results, and this process takes an enormous process time.

The method disclosed in "IEEE Trans. Pattern Analysis and Machine Intelligence, vol. 11, no. 1, pp. 68-83, Jan. 1989" requires a long process time to obtain a correct recognition result. Especially when the a priori probability of each recognition target pattern has a bias, an enormous process time is necessary. This is because a value obtained by dividing an a posteriori probability by an a priori probability is used as an evaluation value.

It is an object of the present invention to provide a pattern recognition method capable of efficiently recognizing a pattern, and a storage medium which stores a pattern recognition program.

According to an aspect of the present invention, there is provided a pattern recognition method used in an information processing apparatus for performing processing of recognizing an entire pattern based on information obtained by recognition processing of a plurality of steps, comprising: expanding recognition candidates of a next step belonging to each recognition candidate, which are processing result candidates in recognition processing of each step; calculating an evaluation value of each expanded recognition candidate based on an a posteriori probability given a result of executed recognition processing; selecting recognition candidates based on the calculated evaluation value of each recognition candidate; and determining a pattern recognition result based on the selected recognition candidates.

According to another aspect of the present invention, there is provided a computer-readable storage medium storing a program for performing processing of recognizing an entire pattern based on information obtained by recognition processing of a plurality of steps, the program comprising: a function of expanding recognition candidates of a next step belonging to each recognition candidate, which are processing result candidates in recognition processing of each step; a function of calculating an evaluation value of each expanded recognition candidate based on an a posteriori probability given a result of executed recognition processing; a function of selecting recognition candidates based on the calculated evaluation value of each recognition candidate; and a function of determining a pattern recognition result based on the selected recognition candidates.

The invention can be more fully understood from the following detailed description when taken in conjunction with the accompanying drawings, in which:

FIG. 1 is a view showing processes in the steps of face recognition processing using a pattern recognition method according to the embodiment;
FIG. 2 is a view showing an example of an address database;
FIG. 3 is a view showing an example of notation of address information;
FIG. 4 is a view showing an example of word candidates obtained from the address information image shown in FIG. 3;
FIG. 5 is a conceptual view of matching processing expressed by a search tree;
FIG. 6 is a view showing the states of nodes expressed by a search tree;

FIG. 7 is a view showing an example of character candidates;
FIG. 8 is a block diagram showing an example of the arrangement of an information processing apparatus having a pattern recognition function;
FIG. 9 is a view showing an example of an image as a target of pattern recognition processing;
FIG. 10 is a view showing an example of the structure of the address database serving as a dictionary database;
FIG. 11 is a block diagram showing an example of the arrangement of a pattern recognition unit;
FIG. 12 is a view showing an example of word candidates extracted from the input image shown in FIG. 9;
FIG. 13 is a flowchart for explaining the process sequence of the first example of pattern recognition processing;
FIG. 14 is a conceptual view showing an example of the structure of the search tree;
FIG. 15 is a flowchart for explaining the process sequence of the second example of pattern recognition processing of the information processing apparatus;
FIG. 16 is a flowchart for explaining the process sequence of the third example of pattern recognition processing of the information processing apparatus;
FIG. 17 is a block diagram showing an example of the arrangement of the pattern recognition unit in the information processing apparatus according to the fourth processing example;
FIG. 18 is a graph conceptually showing the relationship between the number of nodes and the process time of the nodes;
FIG. 19 is a flowchart for explaining the process sequence of the fourth example of pattern recognition processing of the information processing apparatus; and
FIG. 20 is a flowchart for explaining the process sequence of the fifth example of pattern recognition processing of the information processing apparatus.

An embodiment of the present invention will be described in detail with reference to the accompanying drawing.

An outline of pattern recognition processing according to the embodiment will be explained.

Pattern recognition processing often requires a high process speed because it needs to end within a predetermined time. As a typical example of pattern recognition processing, character information such as address information formed from pieces of information of a plurality of layers is recognized as a whole. In the address information recognition processing, frequently, an upper layer with a few candidates is recognized first, and the candidates of a lower layer are then narrowed down using the recognition result. In pattern recognition processing including processes of a plurality of steps (multistage pattern recognition), to speed up the entire processing, recognition processing using a coarse discriminator for performing a high-speed operation (i.e., recognition processing of selecting candidates with emphasis placed on the process speed) is executed in the initial step. In this case, processing of the succeeding stage sometimes employs a method of sequentially narrowing down the process range or process targets using the process result of the preceding stage. The problem of selecting correct candidates from the candidates in a plurality of steps can be regarded as a search problem.

That is, the multistage pattern recognition processing allows to narrow down the process range or targets in the succeeding stage using, e.g., the recognition result of the preceding stage. This method is equivalent to a beam search. The multistage pattern recognition processing to be described in this embodiment uses a search method of sequentially narrowing down candidates in each step based on evaluation values obtained from, e.g., a posteriori probabilities. The search method is assumed to be, for example, a method of sequentially narrowing down a predetermined number of candidates in each step or the best-first search method. Note that an a posteriori probability is represented by $P(c|x)$, which is the probability that a candidate c will be correct on condition of an output x obtained by recognition processing. The approximate value of the a posteriori probability $P(c|x)$ is calculated by an approximate calculation method to be described later. An a priori probability is represented by $P(c)$, which is the probability that the candidate c will be correct before recognition processing.

Typical examples of multistage pattern recognition processing are processing of recognizing a person based on biometrical information such as a face image and processing of recognizing address information formed from pieces of information of a plurality of layers. Address information contains pieces of information of a plurality of layers such as first layer information (e.g., city name), second layer information (e.g., town name or street name), and third layer information (e.g., lot number or street number). Millions to ten millions pieces of address information can be formed in total by combining the pieces of information of the layers. For this reason, it is not efficient to execute recognition processing for all pieces of address information. It is possible to efficiently execute information recognition processing and quickly obtain a recognition result by applying the pattern recognition method to be explained in this embodiment to recognition processing of information (e.g., address information) formed from pieces of information of a plurality of layers.

As techniques concerning word recognition processing, methods of calculating an a posteriori probability as the evaluation value of a word candidate are disclosed in reference 1 : Tomoyuki Hamamura, Takuma Akagi, Hiroyuki Mizutani, and Bunpei Irie, "Word Marching Using Bayes Estimation Based on Normalized Word Length", Image Recognition/Understanding Symposium (MIRU2000) lecture transactions II, pp. 1-6 (Jul. 2000), reference 2 : Tomoyuki Hamamura, Takuma Akagi, and Bunpei Irie, "An Evaluation Function Based on a Posteriori Probability for Word Recognition", Technical Report of IEICE, PRMU2006-92, (Oct. 2006), and reference 3 : Tomoyuki Hamamura, Takuma Akagi, and Bunpei Irie, "An Analytic Word Recognition Algorithm Using a Posteriori Probability - Normalization of the Number of Segmentation Candidates", Technical Report of IEICE, PRMU2006-238, (Mar. 2007).

Reference 1 describes that the a posteriori probability ratio (the ratio of an a priori probability to an a posteriori probability) of a word candidate can be resolved to the product of the a posteriori probability ratios of characters by using an approximation representing that the recognition results of characters are independent. Reference 2 describes a method of calculating a normalized a posteriori probability ratio by equation expansion to avoid an approximation that generates a large error in reference 1. Reference 3 describes a method of calculating an extended a posteriori probability ratio using the fact that characters of some kinds are written even outside a place of interest.

However, to calculate the normalized a posteriori probability ratio described in reference 2 or the extended a posteriori probability ratio described in reference 3, processing needs to be performed for all words in the word dictionary. This suggests that the normalized a posteriori probability ratio or extended a posteriori probability ratio calculation requires a longer time as the number of words in the word dictionary increases. In this embodiment, equation expansion that allows application of the idea of reference 3 even when the processing is performed for only one word of interest will be described. That is, in the pattern recognition method to be explained in the embodiment, an a posteriori probability is calculated by equations applicable to a method capable of efficiently searching for a candidate.

The relationship between the search problem and multistage pattern recognition will be described next.

Face recognition processing and address recognition processing will be described as examples of multistage pattern recognition processing.

An example of face recognition processing will be described first.

Face recognition processing is a kind of biometrics. In the face recognition processing, a person is identified based on a person face image that is biometrical information. The face recognition processing obtains a recognition result roughly by the processes of the following three steps. More specifically, in the process of the first step of face recognition processing, a person image is detected from an acquired image (input image). In the process of the second step, a face image is detected from the detected person image. In the process of the third step, the detected face image is collated with the face image of each registrant.

The process of the first step is person detection processing executed by applying a person detection discriminator to an input image. The person detection discriminator detects a person image by overlaying, on the input image, a person detection template whose position and size change. The process of the first step is executed for, e.g., a low-resolution image to quickly obtain a process result.

The process of the second step is face detection processing executed by applying a face detection discriminator to the person image obtained in the first step. The face detection discriminator detects a face image by overlaying, on the person image, a face detection template whose position and size change. The process of the second step is executed for, e.g., a high-resolution image to accurately detect a face.

The process of the third step is face collation processing of collating the face image obtained in the second step with the face image of each registrant. The process of the third step is executed for, e.g., a high-resolution face image to accurately identify a face.

FIG. 1 shows the processes in the steps of face recognition processing which is expressed by a search tree. Note that the search tree indicates the way a search is made, representing the candidates of a plurality of layers as nodes. In the search tree shown in FIG. 1, the number of registrants is three.

The search tree shown in FIG. 1 expresses candidates in the respective steps as nodes. In the process of the first step, the person detection discriminator runs in various positions and sizes to obtain a plurality of person detection results. In the search tree shown in FIG. 1, nodes of the first stage correspond to the plurality of person detection results obtained as candidates of the first step. That is, each node of the first stage under the root node of the search tree corresponds to the detection result of a person detected by the person detection discriminator in one position and size. In the process of the second step, a plurality of face detection results are obtained in correspondence with each person detection result (person image) obtained by the process of the first step. In the search tree shown in FIG. 1, nodes of the second stage correspond to the plurality of face detection results obtained as process results of the second step. Hence, a plurality of nodes of the second stage belong to each node of the first stage of the search tree. In the process of the third step, collation results equal in number to the registrants are obtained in correspondence with each face detection result (face image) obtained by the process of the second step. In the search tree shown in FIG. 1, each node of the third stage corresponds to the collation result of a registrant obtained as a process result of the third step. Hence, nodes of the third stage, which are equal in number to the registrants, belong to each node of the second stage of the search tree.

The parent-child relationship of nodes as shown in FIG. 1 represents an inclusion relation. For example, four nodes B to E belong to a node A which is one process result of the first step shown in FIG. 1. The nodes B to E correspond to four process results (face detection results) of the second step based on the process result of the node A. Three nodes F to H belong to the node C. The nodes F to H correspond to three process results (collation results of three registrants) of the third step based on the node C which is a process result of the second step.

Ideally, the face recognition processing is performed for all nodes of the third stage. However, to speed up the processing, the process of the third step (collation processing) must be performed efficiently using the process results of the first step and those of the second step. This corresponds to a search problem solving method of efficiently searching the search tree shown in FIG. 1.

An example of address information recognition processing will be described next.

FIG. 2 is a view showing an example of an address database. Address information as the recognition target includes pieces of information of a plurality of steps. In the example shown in FIG. 2, the first stage of address information as the recognition target is "city name", the second stage is "town name", and the third stage is "lot number".

FIG. 3 is a view showing an example of notation of address information. FIG. 3 shows an example of an image which is given as an input image of recognition processing. For example, the image shown in FIG. 3 is information obtained by causing, e.g., a scanner to read a medium on which address information is written. The image including address information as shown in FIG. 3 undergoes, for example, line candidate detection, word candidate extraction, character candidate extraction, and individual character recognition of each word candidate. When individual character recognition results are obtained, a plurality of word candidates are selected based on the individual character recognition results. Processing of matching each word candidate with each word in an address database will be described below.

FIG. 4 is a view showing an example of word candidates obtained from the address information image shown in FIG. 3. In the example shown in FIG. 4, word candidates I1 to I11 are detected. FIG. 5 shows the matching processing expressed by a search tree. More specifically, a set of a word candidate Ii and a word in the address database corresponds to one node of the search tree. Matching of one set corresponds to a search of one node.

In the address information recognition processing, ideally, all words in the address database are matched with all word candidates. However, the address database stores an enormous number of words. Hence, the multistage pattern recognition method efficiently searches for a solution (determines the recognition result of the entire address information) by performing matching processing from an upper layer.

The above-described multistage pattern recognition normally adopts a procedure of sequentially executing processing from an upper stage such that candidates are narrowed down in each stage, and then, processing of the next stage is performed. For example, in the example shown in FIG. 1, processing is performed for all nodes of the first stage to narrow down them to n nodes. Next, processing is performed for all nodes of the second stage, which belong to each of the nodes narrowed down in the first stage, thereby narrowing down the nodes of the second stage to n nodes. Then, processing is performed for all nodes of the third stage, which belong to each of the nodes narrowed down in the second stage, and an optimum recognition result is determined in the nodes of the third stage. The sequence of the series of processes is equivalent to a beam search from the viewpoint of the search problem.

The best-first search method is known as an excellent solution to the search problem. In the best-first search method, out of child nodes belonging to a processed node, all unprocessed nodes are stored. A node having a highest evaluation value is set as the next search target. Assume that in the example shown in FIG. 1, the nodes A and C are processed, and the remaining nodes are unprocessed. Unprocessed child nodes of the nodes A and C are the six nodes B, D, E, F, G, and H. In this case, the next search target is selected from the six nodes B, D, E, F, G, and H. If such a best-first search is usable even in multistage pattern recognition, the search efficiency can be increased.

Generally, the beam search only needs comparison of nodes in the same stage. Hence, for example, a similarity output from the discriminator of the stage is used as an evaluation value. However, the best-first search requires to compare nodes of different stages. For this reason, in the best-first search, direct comparison of outputs of a discriminator is meaningless. That is, evaluation values used in the existing beam search cannot be used in the best-first search.

This embodiment provides a pattern recognition method which uses an a posteriori probability as an evaluation value. Generally, an a posteriori probability defined in, e.g., non-patent reference 3 described above is hard to directly calculate. However, according to the methods described in references 1, 2, and 3 described above, it is possible to approximately calculate an a posteriori probability based on an output of individual character recognition in, e.g., word recognition. In barcode recognition processing of this embodiment, an approximate a posteriori probability serving as an evaluation value is calculated by applying the calculation techniques described in references 1, 2, and 3 described above.

A method of calculating an a posteriori probability serving as an evaluation value to be used in the best-first search will be described next.

Let xi be a process result corresponding to a node ni. For example, when the best-first search is applied to face recognition processing, the output from the discriminator of each step corresponding to each node ni corresponds to the process result xi. When the best-first search is applied to address information recognition processing, for example, a result of character recognition in each word candidate of each step corresponding to each node ni corresponds to the process result xi. In the following description, X, ni, Ui, and Xetc will be defined as follows. X represents all process results corresponding to all processed nodes. Ui is a set of nodes reachable by tracing the parent nodes of ni, and ni ∉ Ui. Xetc represents all process results of processed nodes which are not included in Ui.

FIG. 6 is a view showing the states of nodes expressed by a search tree. Referring to FIG. 6, full circles indicate processed nodes, and open circles and double circles indicate unprocessed nodes. A double circle represents a node having a processed node as a parent. That is, in the example shown in FIG. 6, the nodes indicated by double circles are the candidates of the next search target. For each of these nodes, an a posteriori probability P(ni|X) is calculated. The a posteriori probability P(ni|X) is the probability that not only the node ni but all nodes included in Ui will be satisfied. In the example of address information recognition processing, the a posteriori probability P(ni|X) is not a probability that a word (e.g., town name) in a single layer will be written but words in upper layers will be written simultaneously. This corresponds to the probability that an address will be written. In the example of face recognition processing, if a child node is satisfied, its parent nodes are automatically satisfied.

$$P(n_i \mid X) = \frac{p(X|n_i)P(n_i)}{P(X)} \quad (1)$$

$$\approx P(n_i)\frac{\left\{\prod_{n_j \in U_i} P(x_j \mid n_i)\right\}P(x_{etc})}{\left\{\prod_{n_j \in U_i} P(x_j)\right\}P(x_{etc})} \quad (2)$$

$$\approx P(n_i)\prod_{n_j \in U_i}\frac{P(x_j \mid n_j)}{P(x_j)} \quad (3)$$

Expression (2) uses an approximation representing that the process results of the nodes included in Ui are independent of the remaining process results. Expression (3) uses an approximation representing P(xj|ni) ≈ P(xj|nj). The a posteriori probability P(ni|X) of the node ni can approximately be calculated using expression (3). In the example of face recognition processing, xj is the output of a single discriminator. This makes it possible to easily obtain P(xj|nj) and P(xj) and calculate the a posteriori probability by collecting data. In the example of address information recognition processing, xj includes a plurality of character recognition results in word candidates. For this reason, calculation of expression (3) is not simple. The a posteriori probability calculation method in address information recognition processing will be described later in detail.

Expression (3) can be rewritten as

$$\frac{P(n_i \mid X)}{P(n_i)} \approx \prod\nolimits_{n_j \in U_i}\frac{P(n_j \mid x_j)}{P(n_j)}$$

When the ratio of an a priori probability to an a posteriori probability is referred to as an a posteriori probability ratio, "the a posteriori probability ratio of the node ni corresponds to the product of the a posteriori probability ratios of its parent nodes".

The a posteriori probability ratio calculation method in address information recognition processing will be described next.

In address information recognition processing, xj includes a plurality of character recognition results in word candidates. For this reason, the a posteriori probability ratio P(xj|nj)/P(xj) in expression (3) is often hard to calculate. References 1, 2, and 3 propose several equations of the a posteriori probability ratio. They will be summarized with emphasis placed on the denominator P(xj) of the a posteriori probability ratio. In reference 1, all character recognition results of word candidates included in xj are approximated to be independent. The calculation is sometimes difficult because a large error may be generated, and terms concerning selection of a character candidate structure (to be described later) or a path may remain. The normalized a posteriori probability ratio described in reference 2 rewrites the denominator to P(xj) = $\Sigma_k$P(wj,wk) and expands the denominator calculation for all words in the word dictionary, thereby successfully avoiding approximate deformation that generates a large error. Additionally, the denominators and numerators successfully cancel terms that are hard to calculate. The extended a posteriori probability ratio described in reference 3 reduces approximate errors by considering that characters of some kinds are written even outside a word candidate of interest. When the presence of characters of some kinds is taken into consideration, some terms deteriorate the calculation convenience. However, any term that is hard to calculate can be canceled by the denominator and numerator by expanding the denominator calculation for all words in the word dictionary, like the normalized a posteriori probability ratio.

However, to use the a posteriori probability ratio even in a search, calculation is preferably attained by processing not all words but only one word of interest. For this purpose, this embodiment assumes by the following equation expansion that "characters of some kinds are written", instead of expanding the denominator calculation for all words in the word dictionary. This ensures the advantage of the extended a posteriori probability ratio, i.e., the advantage that the approximation accuracy rises as compared to the method assuming that all character recognition results are independent can be obtained. It is also possible to cancel terms hard to calculate.

Let Li be a word candidate for the node ni, and wi be a word. Searching for the node ni amounts to matching the word wi with the word candidate Li. Let Ai be the set of all character candidates in the word candidate Li. Each character candidate a $\in$ Ai.

FIG. 7 is a view showing an example of character candidates. The structure shown in FIG. 7 is called a lattice structure. That is, the character candidates are assumed to have the lattice structure shown in FIG. 7. In the following description, ai, ri, Li, Si, xi, and wi will be defined as follows. That is, ri is the character recognition result of a character candidate ai. All character recognition results in the word candidate Li are represented by ri. Si is a character candidate structure. The character candidate structure indicates the adjacency information of character candidates or information such as a character candidate count except the character recognition results. The above-described process result xi is defined as xi = (ri,Si). The jth character of the word wi is represented by cij $\in$ C (C is a set of alphabetic characters). C* is an arbitrary character string.

The set of all paths from the left end to the right end in the word candidate Li is Fi = {fp}, p = 1, 2, ..., the path is fp = (aflp,af2p, ...), and afjp $\in$ Ai. Assume that af(j+i)p is located on the right side of afjp. In FIG. 7, an example of the path fp is indicated by the bold line. The set of character candidates on the path fp is E'p = {afjp}, j = 1, 2, .... The set of character candidates included not in E'p but in Ai is Ep. Ep $\cap$ E'p = $\phi$, and Ep $\cup$ E'p = Ai. The a posteriori probability ratio P(xj|nj)/P(xj) are rewritten as

$$\frac{P(x_j \mid n_j)}{P(x_j)} \approx \frac{P(r_j, S_j \mid L_j, w_j)}{P(r_j, S_j \mid L_j, C*)} \quad (4)$$

$$= \frac{\sum_{f_p \in F_j} P(r_j, S_j, f_p \mid L_j, w_j)}{\sum_{f_p \in F_j} P(r_j, S_j, f_p \mid L_j, C*)} \quad (5)$$

$$\approx \frac{\max_{f_p \in F_j} \{P(r_j \mid S_j, f_p, L_j, w_j) P(S_j, f_p \mid L_j, w_j)\}}{\max_{f_p \in F_j} \{P(r_j \mid S_j, f_p, L_j, C*) P(S_j, f_p \mid L_j, C*)\}} \quad (6)$$

When nodes obtained by tracing their parent nodes are np1, np2, ..., the numerator P(xj|nj) on the lefthand side of expression (4) indicates P(xj|Lj, wj, Lp1, wp1, Lp2, wp2, ...). It is P(xj|Lj, wj) if the approximation represents that xj is affected only by information about the word candidate Li.

The denominators of expression (4) define P(xj) ≈ p(xj|Lj, C*) because it is an approximation representing that each word candidate includes characters of some kinds.

Expression (6) uses an approximation representing that probabilities are negligible for any path except a path having a maximum probability. The following approximation is calculated next.

$$P(S_j, f_p \mid L_j, w_j) \approx \begin{cases} K_j, & f_p = w_j \\ 0, & f_p \neq w_j \end{cases} \qquad (7)$$

$$P(S_j, f_p \mid L_j, C*) \approx K_j \qquad (8)$$

where Kj is a constant independent of p. This approximation represents the likelihood that the probability that each path is correct is equal for all paths.

Expression (6) is calculated using equations (7) and (8) in the following way. (If fp has a length that does not match the length of the word wj, expression (6) yields 0. The following calculations are done in other cases).

$$\frac{P(x_j \mid n_j)}{P(x_j)} \approx \frac{\max\limits_{f_p \in F_j} P(r_j \mid S_j, f_p, L_j, w_j)}{\max\limits_{f_p \in F_j} P(r_j \mid S_j, f_p, L_j, C*)} \qquad (9)$$

$$\approx \frac{\max\limits_{f_p \in F_j} \left\{ \prod\limits_k P\left(\gamma_{f_k^p} \mid c_{jk}\right) \prod\limits_{a_k \in E_p} P(\gamma_k) \right\}}{\max\limits_{f_p \in F_j} \left\{ \prod\limits_k P\left(\gamma_{f_k^p} \mid C\right) \prod\limits_{a_k \in E_p} P(\gamma_k) \right\}} \qquad (10)$$

$$= \frac{\mathrm{match}(L_j, w_j)}{\mathrm{match}(L_j, C*)} \qquad (11)$$

where match() is defined by

$$\mathrm{match}(L_j, w_j) \equiv \max_{f_p \in F_j} \left\{ \prod_k \frac{P\left(\gamma_{f_k^p} \mid c_{jk}\right)}{P\left(\gamma_{f_k^p}\right)} \right\} \qquad (12)$$

$$\text{match}(L_j, C^*) \equiv \max_{f_p \in F_j} \left\{ \prod_k \frac{P\left(\gamma_{f_k^p} | C\right)}{P\left(\gamma_{f_k^p}\right)} \right\} \quad (13)$$

Expression (10) uses an approximation representing that the character recognition results are independent. When rewriting expression (10) to expression (11), the denominator and numerator are divided by a value independent of fp, which is given by

$$\prod_{a_k \in A_j} P(\gamma_k)$$

Note that expression (9) allows to cancel terms concerning a character candidate structure Sj or path fp which are hard to calculate.
Expression (11) is the expression of the a posteriori probability ratio proposed in this embodiment. Expression (11) cancels extra terms while improving the approximation accuracy using the same idea as that of the extended a posteriori probability ratio. This calculation can be done by processing only the word wj of interest and is also usable in the search.
As described above, the pattern recognition method according to the embodiment regards part of multistage pattern recognition processing as a search problem. In the pattern recognition method, candidates obtained in each step are defined as nodes, and the obtained nodes are selectively processed based on the a posteriori probabilities. Hence, the pattern recognition method enables to efficiently and quickly execute multistage pattern recognition processing.
In the pattern recognition method, a method such as the best-first search is applicable when selecting process target nodes of each stage. In the best-first search, nodes of different steps need to be compared. As evaluation values for this process, the pattern recognition method uses a posteriori probabilities. An a posteriori probability is calculated based on the product of the a posteriori probability ratios (the ratio of an a priori probability to an a posteriori probability) of nodes. When specialized to address information recognition, the a posteriori probability ratio of each node is calculated using expressions which are usable even in the search.
An application example of the above-described pattern recognition method will be described below.
FIG. 8 is a block diagram showing an example of the arrangement of an information processing apparatus 11 having the pattern recognition function of the above-described pattern recognition method.
In the example shown in FIG. 8, an image input device 12 is connected to the information processing apparatus 11. The image input device 12 is formed from, e.g., a scanner or a camera. The image input device 12 acquires an image to be processed by the information processing apparatus 11. The image input device 12 supplies acquired image information to the information processing apparatus 11. Note that the image input device 12 may read out image information stored on a recording medium and supply the image information read out from the recording medium to the information processing apparatus 11.
The information processing apparatus 11 functions as a pattern recognition apparatus or a character recognition apparatus. The information processing apparatus 11 recognizes, by pattern recognition processing, desired information (e.g., address information or a face image) contained in an image supplied from the image input device 12.
The information processing apparatus 11 is implemented as, e.g., a computer. In the arrangement example shown in FIG. 8, the information processing apparatus 11 includes an image interface (I/F) 21, processor 22, working memory 23, program memory 24, data memory 25, and output interface (I/F) 26. More specifically, the information processing apparatus 11 is implemented by, e.g., a computer which includes a data input/output unit serving as the image interface 21 and output interface 26, a control unit serving as the processor 22, and a storage unit serving as the working memory 23, program memory 24, and data memory 25.
The image interface 21 receives an image supplied from the image input device 12. That is, the image interface 21 acquires an image as a target of pattern recognition processing.
FIG. 9 is a view showing an example of an image which is received by the image interface 21 as a target of pattern recognition processing. FIG. 9 shows an example of a read image of a paper sheet on which address information containing pieces of information of a plurality of layers is written. FIG. 9 shows an example of an image which is a target of pattern recognition processing of recognizing address information containing pieces of information of a plurality of layers.

The processor 22 executes various kinds of processing functions of the information processing apparatus 11. The processor 22 is formed from an arithmetic unit such as a CPU. The processor 22 implements various kinds of processing functions by executing a program stored in the program memory 24 or the data memory 25. For example, the processor 22 includes a pattern recognition unit 22a for performing pattern recognition processing as one of the functions implemented by executing the program. An example of the arrangement of the pattern recognition unit 22a will be described later in detail.

The working memory 23 is a storage unit for temporarily storing data. The working memory 23 is formed from, e.g., a RAM (Random Access Memory). The program memory 24 is a storage unit which stores, e.g., control programs and control data. The program memory 24 is formed from, e.g., a ROM (Read Only Memory). The data memory 25 is a mass storage unit for storing data. The data memory 25 is formed from, e.g., an HDD (Hard Disk Drive).

The data memory 25 includes a dictionary database 25a to be used in pattern recognition processing. For example, if the information processing apparatus 11 is an apparatus for recognizing address information by pattern recognition processing, the dictionary database 25a is formed as an address database storing address information. If the information processing apparatus 11 is an apparatus for performing, as pattern recognition processing, personal authentication based on biometrical information such as a face image, the dictionary database 25a is formed as a biometrical information database storing the biometrical information of registrants. In this embodiment, the information processing apparatus 11 is assumed to recognize address information. Hence, the dictionary database 25a is an address database.

FIG. 10 is a view showing an example of the structure of the address database serving as the dictionary database 25a. In the structural example shown in FIG. 10, the dictionary database (address database) 25a stores address information including words in a plurality of layers (CITY layer, STREET layer, and DIRECTION layer). That is, the dictionary database 25a stores information such that information of each layer includes pieces of information of an immediately lower layer.

In the example shown in FIG. 10, the CITY layer includes words such as "STOCKHOLM" (word D1), "GOTEBORG" (word D2), and "ABCDE" (word D3). The STREET layer includes words such as "AGATAN" (word D4), "TOSHIBA" (word D5), and "BGATAN" (word D6). The DIRECTION layer includes words such as "EAST", "WEST", and "NORTH". In the example shown in FIG. 10, two words "AGATAN" (word D4) and "TOSHIBA" (word D5) in the STREET layer belong to one word "STOCKHOLM" (word D1) in the CITY layer.

The output interface 26 externally outputs, e.g., information obtained by the processor 22. For example, a recognition result obtained by pattern recognition processing in the processor 22 is externally output from the output interface 26.

The arrangement of the pattern recognition unit 22a will be described next.

FIG. 11 is a block diagram showing an example of the arrangement of the pattern recognition unit 22a. The following explanation will be made assuming that the information processing apparatus 11 recognizes character information such as address information including pieces of information of a plurality of layers.

The pattern recognition unit 22a includes a recognition control unit 30, candidate extraction unit 31, node expansion unit 32, evaluation value calculation unit 33, node selection unit 34, and determination unit 35. As described above, the pattern recognition unit 22a is a function implemented by causing the processor 22 to execute a program. That is, the candidate extraction unit 31, node expansion unit 32, evaluation value calculation unit 33, node selection unit 34, and determination unit 35 are also functions implemented by causing the processor 22 to execute the program.

The recognition control unit 30 has a function of controlling pattern recognition processing in the pattern recognition unit 22a. The candidate extraction unit 31 extracts pieces of information representing candidates of each layer in a recognition result from an input image supplied from the image input device 12 via the image interface 21. For example, if the information processing apparatus 11 is an apparatus for recognizing character information such as address information including pieces of information of a plurality of layers, the candidate extraction unit 31 extracts word candidates of each layer from an input image.

FIG. 12 is a view showing an example of word candidates extracted from the input image shown in FIG. 9. In the example shown in FIG. 12, the recognition target address information is assumed to include alphabetic characters. Hence, in the example shown in FIG. 12, seven word candidates are extracted. Note that the seven word candidates shown in FIG. 12 exist at positions P1 to P7 represented by position information in the image.

The node expansion unit 32 generates nodes to form a search tree for the candidates extracted by the candidate extraction unit 31. The node expansion unit 32 executes processing of obtaining, for each node, the nodes of the next layer belonging to that node. More specifically, the node expansion unit 32 selects, for each candidate of a given layer, all possible candidates of the next layer, thereby generating a search tree including the nodes in a plurality of layers.

For example, a node representing that the word candidate at the position P6 shown in FIG. 12 is the word D1 in the address database 25a shown in FIG. 10 is expressed as (D1,P6). In the address database 25a shown in FIG. 10, the word D4 ("AGATAN" in the "STREET" layer) and the word D5 ("TOSHIBA" in the "STREET" layer) belong to the word D1 ("STOCKHOLM" in the "CITY" layer). If the position P6 indicates information in the CITY layer, it is possible to determine based on the address information description order (notation rules for information in the layers) that information in the STREET layer exists at the position P7 or P3 in the input image shown in FIG. 12. In accordance with these conditions, the node expansion unit 32 expands four nodes (D4,P7), (D4,P3), (D5,P7), and (D5,P3) as nodes belonging to the node (D1,P6).

The evaluation value calculation unit 33 calculates the evaluation value of each node generated by the node expansion unit 32. For example, the evaluation value calculation unit 33 calculates the evaluation value of each node by executing recognition processing for each candidate serving as a node. In this embodiment, the evaluation value calculation unit 33 calculates an a posteriori probability as an evaluation value using the above-described method.

The node selection unit 34 selects, from the nodes, a node to be finally evaluated. The node selection unit 34 determines based on the evaluation values calculated by the evaluation value calculation unit 33 whether a node should finally be evaluated. For example, the node selection unit 34 selects a predetermined number of nodes in descending order of evaluation value calculated by the evaluation value calculation unit 33 (i.e., N nodes placed at higher ranks). When the best-first search is applied as the search method, the node selection unit 34 selects a node having a highest evaluation value from a plurality of terminal nodes (to be described later) independently of the layers.

The determination unit 35 determines the final recognition result of the series of pattern recognition processes. When the node selection unit 34 has selected the node of the final layer, the determination unit 35 determines the final recognition result based on the node of the final layer. For example, when the node selection unit 34 has obtained a plurality of nodes of the final layer, the determination unit 35 outputs, as the final recognition result, a recognition result based on a node having a maximum evaluation value. The determination unit 35 may output, as the final recognition result, recognition results (one or a plurality of recognition results) based on, out of the nodes of the final layer obtained by the node selection unit 34, nodes each having an evaluation value equal to or larger than a predetermined value. If the evaluation value of the node of the final layer obtained by the node selection unit 34 is smaller than the predetermined value, the determination unit 35 may output, as the final recognition result, a message representing that the pattern is unrecognizable.

The first, second, and third examples of pattern recognition processing of the information processing apparatus 11 having the above-described arrangement will be described next.

The first example of pattern recognition processing of the information processing apparatus 11 will be described first.

FIG. 13 is a flowchart for explaining the process sequence of the first example of pattern recognition processing.

An image which is the target of pattern recognition processing supplied from the image input device 12 is input to the information processing apparatus 11 via the image interface 21 (step S10). When the image as the pattern recognition processing target is input via the image interface 21, the processor 22 starts pattern recognition processing by the pattern recognition unit 22a. More specifically, the recognition control unit 30 in the pattern recognition unit 22a first causes the candidate extraction unit 31 to extract word candidates from the input image (step S11). For example, when the image shown in FIG. 9 is given, the candidate extraction unit 31 extracts the word candidates shown in FIG. 12. At this time, the candidate extraction unit 31 adds identification information to identify each extracted word candidate and specifies information representing the position of each word candidate.

When the word candidates are extracted from the input image, the recognition control unit 30 starts search processing for each extracted word candidate. First, the recognition control unit 30 sets the root node of a search tree. This corresponds to starting search tree generation on a buffer. More specifically, the recognition control unit 30 stores the root node in a buffer provided on, e.g., the working memory 23 (step S12). After setting the root node, the recognition control unit 30 sets "L = 1" as the initial value of a variable L representing a layer under processing (step S13).

When the variable L is set, the recognition control unit 30 generates the nodes of the layer L and calculates the evaluation value of each node (steps S14 to S17). More specifically, the recognition control unit 30 extracts one node already stored in the buffer (step S14). For example, if L = 1, the recognition control unit 30 extracts the root node from the buffer. If L = 2, the recognition control unit 30 sequentially extracts each node of the first layer stored in the buffer.

When one node is extracted from the buffer (step S14), the recognition control unit 30 causes the node expansion unit 32 to execute node expansion processing of obtaining the nodes of an immediately lower layer (layer L) belonging to the extracted node (step S15). For example, if L = 1, the node expansion unit 32 stores, out of the candidates extracted by the candidate extraction unit 31, nodes corresponding to the candidates of the first layer in the buffer as the nodes belonging to the root node. If the node extracted in step S14 is (D1,P6) in the word candidate extraction example shown in FIG. 12, the node expansion unit 32 expands four nodes (D4,P7), (D4,P3), (D5,P7), and (D5,P3), as described above.

When the node expansion unit 32 obtains the nodes of the layer L belonging to the extracted node, the evaluation value calculation unit 33 calculates the evaluation value of each obtained node (step S16). In this case, an a posteriori probability approximately obtained by recognition processing of each node is calculated as an evaluation value using the above-described equations.

When the evaluation value calculation unit 33 calculates the evaluation value of each expanded node, the recognition control unit 30 determines whether an unprocessed node exists in the buffer (step S17). That is, the recognition control unit 30 determines whether the nodes which can be the parent nodes of the nodes of the layer L include an unprocessed node. Upon determining that an unprocessed node exists in the buffer (NO in step S17), the recognition control unit 30 returns to step S14 to extract the next node from the buffer, and repeatedly executes the processes in step S14 to S16.

Upon determining that no unprocessed node exists in the buffer (YES in step S17), the recognition control unit 30 causes the node selection unit 34 to select N nodes at higher ranks in descending order of node evaluation value calculated in step S16 and store them in the buffer (step S18). That is, in the process of step S18, the nodes selected by the node selection unit 34 (nodes whose evaluation values are placed at N higher ranks) are obtained as the nodes of the layer L (i.e., the candidates of the layer L). As the number of nodes to be selected by the node selection unit 34 in descending order of evaluation value, a value not to discard the correct candidate is set. However, the larger the number of nodes to be selected is, the lower the process speed is. Hence, the number of nodes to be selected needs to be set appropriately in accordance with the operation form including the characteristic of the pattern to be recognized and the necessary process time.

When the N nodes at higher ranks are stored in the buffer as the nodes of the layer L, the recognition control unit 30 determines whether the layer L is the final layer of pattern recognition. Upon determining that the layer L is not the final layer (NO in step S19), the recognition control unit 30 increments the variable L by updating it to "L = L + 1" (step S20). When the variable L is incremented, the recognition control unit 30 returns to step S14 to execute processing of each node of the updated layer L.

Upon determining that the layer L is the final layer (YES in step S19), the recognition control unit 30 causes the determination unit 35 to determine the final recognition result (step S21). In this case, the determination unit 35 determines the final recognition result of the pattern recognition processing based on the evaluation value of each node. For example, when each node is evaluated based on a predetermined threshold, the determination unit 35 outputs, as recognition results, candidates specified by nodes each having an evaluation value equal to or larger than the predetermined threshold. To uniquely determine the recognition result of pattern recognition processing, the determination unit 35 outputs a candidate specified by a node having a maximum evaluation value (or a node whose evaluation value is maximum and is equal to or larger than a predetermined threshold) as a recognition result.

As described above, according to the first processing example, the search is performed in the multistage pattern recognition processing by narrowing down the candidates to nodes whose evaluation values are placed at N higher ranks in each layer. According to the first processing example, it is possible to quickly select the correct candidate while decreasing the probability of erroneously discarding the correct candidate.

The second example of pattern recognition processing of the information processing apparatus 11 will be described next.

In the second processing example, the pattern recognition processing uses the best-first search to search for the correct candidate from the candidates of a plurality of layers. As described above, in the best-first search, even the nodes of different layers are compared, and a node having a highest evaluation value is processed preferentially. The evaluation value of each node is calculated by the above-described calculation method.

FIG. 15 is a flowchart for explaining the process sequence of the second example of pattern recognition processing of the information processing apparatus 11.

An image which is the target of pattern recognition processing supplied from the image input device 12 is input to the information processing apparatus 11 via the image interface 21 (step S30). When the image as the pattern recognition processing target is input via the image interface 21, the processor 22 starts pattern recognition processing by the pattern recognition unit 22a. More specifically, the recognition control unit 30 in the pattern recognition unit 22a first causes the candidate extraction unit 31 to extract word candidates from the input image (step S31).

When the word candidates are extracted from the input image, the recognition control unit 30 starts search processing for each extracted word candidate. First, the recognition control unit 30 sets the root node of a search tree. This corresponds to starting search tree generation on a buffer. More specifically, the recognition control unit 30 stores the root node in a buffer on, e.g., the working memory 23 (step S32). After setting the root node, the recognition control unit 30 sequentially searches for a node having a maximum evaluation value.

More specifically, the recognition control unit 30 extracts one node having a maximum evaluation value, which is already stored in the buffer (step S33). If only the root node is stored in the buffer, the recognition control unit 30 extracts the root node from the buffer. If a plurality of nodes are stored in the buffer, the recognition control unit 30 extracts a node having a maximum evaluation value from the nodes stored in the buffer independently of the layers of the nodes.

When one node is extracted from the buffer, the recognition control unit 30 determines whether the extracted node is a terminal node (step S34). A terminal node is a node to which no nodes belong. That is, a terminal node is a node at an end of the search tree formed from the root node. FIG. 14 is a conceptual view showing an example of the structure of the search tree. In the example shown in FIG. 14, open and full circles are nodes representing states in the search. In the example shown in FIG. 14, each full circle represents a terminal node having no lower layer node (no belonging node).

Upon determining that the node is not a terminal node (NO in step S34), the recognition control unit 30 causes the node expansion unit 32 to execute node expansion processing for the extracted node (step S35). As described above, the node expansion processing obtains the nodes of an immediately lower layer (layer L) belonging to the extracted node. If the extracted node is the root node, the node expansion unit 32 stores, out of the candidates extracted by the candidate extraction unit 31, nodes corresponding to the candidates of the first layer in the buffer as the nodes belonging to the root node.

When the node expansion unit 32 obtains the nodes belonging to the extracted node, the evaluation value calculation unit 33 calculates the evaluation value of each obtained node (step S36). In this case, an a posteriori probability approximately obtained by recognition processing of each node is calculated as an evaluation value by the above-described calculation method.

When the evaluation value calculation unit 33 calculates the evaluation value of each expanded node, the recognition control unit 30 stores the nodes and their evaluation values in the buffer in association with each other (step S37). When the obtained nodes and their evaluation values are stored in the buffer, the recognition control unit 30 returns to step S33 to repeatedly execute the above-described processes. The processes in steps S33 to S37 are repeatedly executed until the node extracted in step S33 is determined as a terminal node. As a result, a search tree from the node having the maximum evaluation value to the terminal node is obtained.

More specifically, upon determining in step S34 that the extracted node is a terminal node (YES in step S34), the recognition control unit 30 causes the determination unit 35 to determine whether the evaluation value of the node is equal to or larger than a predetermined threshold (step S38). If it is determined that the evaluation value of the node is smaller than the predetermined threshold (NO in step S38), the recognition control unit 30 determines whether an unprocessed node besides the node exists in the buffer (step S39).

Upon determining that an unprocessed node exists in the buffer (NO in step S39), the recognition control unit 30 returns to step S33 to extract a node having a maximum evaluation value from unprocessed nodes except the node, and executes the processes in step S33 to S37. Upon determining that no unprocessed node exists in the buffer (YES in step S39), the recognition control unit 30 determines that no candidate whose evaluation value is equal to or larger than the predetermined threshold is obtained, and finishes the processing.

If it is determined in step S38 that the evaluation value of the node is equal to or larger than the predetermined threshold (YES in step S38), the recognition control unit 30 causes the determination unit 35 to output a pattern represented by the candidate of each layer specified by the node as the final recognition result (step S40). In the second processing example, all nodes having evaluation values equal to or larger than the predetermined threshold may be output as the final recognition results. This can be implemented by advancing the process to step S39 and executing the process from step S33 for an unprocessed node in the buffer even when the final recognition result is obtained in step S40. This enables to output, as the final recognition results, a plurality of recognition results representing the nodes having evaluation values equal to or larger than the predetermined threshold.

As described above, according to the second processing example, the best-first search is performed to narrow down the candidates as the recognition results, and a final recognition result is obtained based on, out of the candidates that have been narrowed down, candidates having evaluation values equal to or larger than a predetermined threshold. According to the second processing example, it is possible to efficiently narrow down the candidates of recognition results and obtain the final recognition result from the candidates that have been narrowed down.

It is also necessary to compare the nodes of different steps in the best-first search applied to the second processing example. Hence, in the second processing example, an a posteriori probability approximately calculated using the above-described equations is used as an evaluation value. According to the second processing example, it is possible to compare the nodes of different steps and implement the best-first search.

The third example of pattern recognition processing of the information processing apparatus 11 will be described next.

In the third processing example, the pattern recognition processing uses the best-first search to search for the correct candidate from the candidates of a plurality of layers, as in the second processing example. The third processing example is a modification of the second processing example. In the third processing example, a value obtained by dividing the a posteriori probability of each node by an estimated process time is used as the evaluation value of the node.

FIG. 16 is a flowchart for explaining the process sequence of the third example of pattern recognition processing of the information processing apparatus 11. Note that the processes in steps S50 to S60 in FIG. 16 are the same as in steps S30 to S40 of FIG. 14 described in the second processing example.

An image which is the target of pattern recognition processing supplied from the image input device 12 is input to the information processing apparatus 11 via the image interface 21 (step S50). When the image as the pattern recognition processing target is input via the image interface 21, the processor 22 starts pattern recognition processing by the pattern recognition unit 22a. More specifically, the recognition control unit 30 in the pattern recognition unit 22a first causes the candidate extraction unit 31 to extract word candidates from the input image (step S51).

When the word candidates are extracted from the input image, the recognition control unit 30 starts search processing for each extracted word candidate. First, the recognition control unit 30 sets the root node of a search tree. This corresponds to starting search tree generation on a buffer. More specifically, the recognition control unit 30 stores the root node in a buffer on, e.g., the working memory 23 (step S52). After setting the root node, the recognition control unit 30 sequentially searches for a node having a maximum evaluation value.

More specifically, the recognition control unit 30 extracts one node having a maximum evaluation value, which is already stored in the buffer (step S53). When one node is extracted from the buffer, the recognition control unit 30 determines whether the extracted node is a terminal node (step S54). Upon determining that the node is not a terminal node (NO in step S54), the recognition control unit 30 causes the node expansion unit 32 to execute node expansion processing for the extracted node (step S55).

When the node expansion unit 32 obtains the nodes belonging to the extracted node, the evaluation value calculation unit 33 calculates the evaluation value of each obtained node (step S56). In the third processing example, a value obtained by dividing an a posteriori probability by an estimated process time is calculated as an evaluation value

More specifically, the evaluation value calculation unit 33 calculates the a posteriori probability of each node obtained by the node expansion unit 32 (step S61). The a posteriori probability of each node is approximately calculated by recognition processing of each node using the above-described calculation method.

When the a posteriori probability of each node is calculated, the evaluation value calculation unit 33 estimates the time necessary for processing each node (step S62). In this case, the process time required for recognition processing of a lower layer to which each node belongs is estimated. The process time can be estimated based on, e.g., the total number of characters of a word of a lower layer.

When the a posteriori probability and estimated process time of each node are obtained, the evaluation value calculation unit 33 calculates the evaluation value of each node by dividing the a posteriori probability of each node calculated in step S61 by the estimated process time calculated in step S62 (step S63).

When the evaluation value calculation unit 33 calculates the evaluation value of each node by such a method, the recognition control unit 30 stores the nodes and their evaluation values in the buffer in association with each other (step S57). When the obtained nodes and their evaluation values are stored in the buffer, the recognition control unit 30 returns to step S53 to repeatedly execute the above-described processes.

More specifically, upon determining in step S54 that the extracted node is a terminal node (YES in step S54), the recognition control unit 30 causes the determination unit 35 to determine whether the evaluation value of the node is equal to or larger than a predetermined threshold (step S58). If it is determined that the evaluation value of the node is smaller than the predetermined threshold (NO in step S58), the recognition control unit 30 determines whether an unprocessed node besides the node exists in the buffer (step S59).

Upon determining that an unprocessed node exists in the buffer (NO in step S59), the recognition control unit 30 returns to step S53 to extract a node having a maximum evaluation value from unprocessed nodes except the node, and executes the processes in step S53 to S57. Upon determining that no unprocessed node exists in the buffer (YES in step S59), the recognition control unit 30 determines that no candidate whose evaluation value is equal to or larger than the predetermined threshold is obtained, and finishes the processing.

If it is determined in step S58 that the evaluation value of the node is equal to or larger than the predetermined threshold (YES in step S58), the recognition control unit 30 causes the determination unit 35 to output a pattern represented by the candidate of each layer specified by the node as the final recognition result (step S60). In the third processing example, all nodes having evaluation values equal to or larger than the predetermined threshold may be output as the final recognition results. This can be implemented by advancing the process to step S59 and executing the process from step S53 for an unprocessed node in the buffer even when the final recognition result is obtained in step S60. This enables to output, as the final recognition results, a plurality of recognition results representing the nodes having evaluation values equal to or larger than the predetermined threshold.

As described above, according to the third processing example, the a posteriori probability of each candidate is divided by the estimated process time to obtain an evaluation value. The best-first search is performed to narrow down the candidates as the recognition results, and a final recognition result is obtained based on, out of the candidates that have been narrowed down, candidates having evaluation values equal to or larger than a predetermined threshold. According to the third processing example, it is possible to efficiently narrow down the candidates of recognition results based on the evaluation value considering the process time and obtain the final recognition result from the candidates that have been narrowed down.

The fourth example of pattern recognition processing of the information processing apparatus 11 will be described next.

The pattern recognition processing of the fourth example uses a method of searching for nodes (a plurality of nodes) whose evaluation values are placed at N higher ranks. In the fourth processing example, nodes belonging to different layers are also compared, like the best-first search described in the second processing example, thereby searching for nodes whose evaluation values are placed at N higher ranks. In the fourth processing example, it is determined whether the N extracted nodes include a terminal node (the recognition result of the entire pattern) having an evaluation value equal to or larger than a predetermined threshold. In the fourth processing example, if no terminal node having an evaluation value equal to or larger than the predetermined threshold is included in the extracted nodes, the above-described processing is repeated by expanding each extracted node.

In the fourth processing example to be described below, the number of nodes to be extracted is set in advance. The number of nodes to be extracted is set in accordance with conditions such as the recognition processing time, the processing capability of the information processing apparatus, and the features of a pattern (character or word) to be recognized. FIG. 17 is a block diagram showing an arrangement example in which the pattern recognition unit 22a shown in FIG. 11 includes a setting information storage unit 30a to hold the set value of the number of nodes to be extracted.

In the arrangement example shown in FIG. 17, the setting information storage unit 30a is provided in the recognition control unit 30. For example, the set value of the node count to be stored in the setting information storage unit 30a is set at the step of designing the recognition algorithm to be applied to the recognition control unit 30. However, the set value of the node count to be stored in the setting information storage unit 30a may be set by the operator as needed via an operation unit such as a keyboard (not shown).

FIG. 18 is a graph conceptually showing the relationship between the number of nodes to be extracted and the process time of the nodes. As shown in FIG. 18, the process time of the second or subsequent node is shorter than that of the first node. In the example shown in FIG. 18, if each node represents a word candidate formed from Japanese or alphabetic characters, the process time of the second or subsequent node is much shorter than that of the first node. This tendency generally applies to an algorithm of pattern recognition.

That is, the efficiency of pattern recognition processing is supposed to be higher when processing a plurality of nodes together than when individually processing the nodes of recognition candidates. However, the recognition accuracy is not always expected to be higher even when the number of nodes to be processed together is increased without limitation. Hence, the number of nodes to be processed (number of nodes to be extracted) is preferably appropriately set in accordance with the allowable recognition process time, the features of a pattern to be recognized, and the processing capability of the information processing apparatus 11 for executing the pattern recognition processing.

For example, the complexity of characters themselves and the number of words in a dictionary are largely different between Japanese and English. In general, Japanese is supposed to exceed a language using the alphabet in both the character complexity and the number of words in a dictionary. For this reason, the number of nodes to be extracted is preferably set to be larger in Japanese character recognition processing than in alphabetic character recognition processing. In the example shown in FIG. 18, the process time of the first node is longer for Japanese characters than for alphabetic characters. When recognizing a pattern requiring a longer process time for the first node, the efficiency and accuracy can be made higher by processing nodes as many as possible within the tolerance of process time.

The sequence of pattern recognition processing of the fourth example will be described next.

FIG. 19 is a flowchart for explaining the process sequence of the fourth example of pattern recognition processing of the information processing apparatus 11.

An image which is the target of pattern recognition processing supplied from the image input device 12 is input to the information processing apparatus 11 via the image interface 21 (step S70). When the image as the pattern recognition processing target is input via the image interface 21, the processor 22 starts pattern recognition processing by the pattern recognition unit 22a. More specifically, the recognition control unit 30 in the pattern recognition unit 22a first causes the candidate extraction unit 31 to extract word candidates from the input image (step S71).

When word candidates are extracted from the input image, the recognition control unit 30 starts search processing for each extracted word candidate. First, the recognition control unit 30 sets the root node of a search tree. This corresponds to starting search tree generation on a buffer. More specifically, the recognition control unit 30 stores the root node in a buffer provided on, e.g., the working memory 23 (step S72).

After storing the node in the buffer, the recognition control unit 30 extracts a predetermined number of nodes in descending order of evaluation value (N nodes placed at higher ranks). More specifically, the recognition control unit 30 extracts N nodes in descending order of evaluation value from the plurality of nodes stored in the buffer (step S73). If the number of nodes stored in the buffer is smaller than N (for example, if only the root node is stored in the buffer), the recognition control unit 30 extracts all nodes stored in the buffer.

When N nodes are extracted from the buffer, the recognition control unit 30 determines whether the nodes extracted from the buffer include a terminal node (step S74). As described above, a terminal node is a node at an end of the search tree and is represented by, e.g., a full circle in the conceptual view of the search tree in FIG. 15. As shown in FIG. 15, a terminal node has no node that belongs to itself. This indicates that the terminal node represents an entire pattern (e.g., a character string such as address information) formed from a combination of the nodes of the respective layers.

Upon determining that the N nodes extracted from the buffer include no terminal node (NO in step S74), the recognition control unit 30 causes the node expansion unit 32 to execute node expansion processing for each of the N extracted nodes (step S75). The node expansion processing obtains the nodes of an immediately lower layer belonging to each extracted node. If the extracted node is the root node, the node expansion unit 32 stores, out of the candidates extracted by the candidate extraction unit 31, nodes corresponding to the candidates of the first layer in the buffer as the nodes belonging to the root node.

When the node expansion unit 32 obtains a plurality of nodes belonging to each extracted node, the evaluation value calculation unit 33 calculates the evaluation value of each obtained node (step S76). In this example, an a posteriori probability approximately obtained by recognition processing of each node is calculated as an evaluation value by the above-described calculation method.

When the evaluation value calculation unit 33 calculates the evaluation value of each expanded node, the recognition control unit 30 stores the nodes and their evaluation values in the buffer in association with each other (step S77). When the obtained nodes and their evaluation values are stored in the buffer, the recognition control unit 30 returns to step S73 to repeatedly execute the above-described processes. The processes in steps S73 to S77 are repeatedly executed until a terminal node to be employed as a recognition result is detected from the nodes extracted in step S73. As a result, a search tree which sequentially connects the nodes whose evaluation values are placed at N higher ranks is obtained.

Upon determining in step S74 that the nodes extracted from the buffer include a terminal node (YES in step S74), the recognition control unit 30 causes the determination unit 35 to determine whether the evaluation value of the terminal node is equal to or larger than a predetermined threshold (step S78). The buffer stores the evaluation value of each node. Hence, even the terminal node extracted from the buffer also has a calculated evaluation value. The terminal node uniquely specifies the entire pattern. For this reason, the evaluation value of the determination unit represents the likelihood that the entire pattern specified by the terminal node is correct. Hence, if the evaluation value of the terminal node is equal to or larger than the predetermined threshold, the recognition control unit 30 determines that the entire pattern specified by the terminal node is likely to be correct as a recognition result.

More specifically, if the evaluation value of the terminal node included in the N extracted nodes is equal to or larger than the predetermined threshold (YES in step S78), the recognition control unit 30 employs the node combination (entire pattern) specified by the terminal node as the final recognition result of the entire pattern. That is, the recognition control unit 30 outputs, as the final recognition result, the entire pattern including the combination of the nodes of the respective steps specified by the terminal node having an evaluation value equal to or larger than the predetermined threshold (step S80).

As the fourth processing example, all terminal nodes having evaluation values equal to or larger than the predetermined threshold may be output as the candidates of the recognition result of the entire pattern. This can be implemented by advancing the process to step S75 even when the terminal node having an evaluation value equal to or larger than the predetermined threshold is obtained in step S78. In this case, the processes in steps S73 to S79 are executed until the buffer becomes empty while accumulating terminal nodes having evaluation values equal to or larger than the predetermined threshold. This enables the recognition control unit 30 to output a plurality of recognition results based on all terminal nodes having evaluation values equal to or larger than the predetermined threshold.

Upon determining that the evaluation value of the extracted terminal node is smaller than the predetermined threshold (NO in step S78), the recognition control unit 30 advances to step S75 to execute node expansion processing for the nodes except the terminal node. When the evaluation value of each node expanded by the node expansion processing is stored in the buffer (YES in step S79), the recognition control unit 30 returns to step S73 to extract N nodes whose evaluation values are placed as N higher ranks from the buffer, and executes the processes in step S73 to S77. If all the nodes extracted from the buffer are terminal nodes, and all the terminal nodes have evaluation values smaller than the predetermined threshold, the buffer stores no nodes. If the buffer is empty (YES in step S79), the recognition control unit 30 determines that no candidate having an evaluation value equal to or larger than the predetermined threshold is obtained, and finishes the processing.

As described above, according to the fourth processing example, in the processing of recognizing an entire pattern (character string) formed from partial patterns (e.g., words) of a plurality of steps, the best-first search is performed to narrow down the candidates (nodes) of the partial patterns of each step to N candidates. Out of the N nodes that have been narrowed down, a terminal node having an evaluation value equal to or larger than a predetermined threshold is obtained as the final recognition result. In the fourth processing example, it is possible to efficiently narrow down the nodes of the respective steps without discarding any correct nodes and implement efficient and accurate pattern recognition processing.

In the fourth processing example, to extract N nodes having evaluation values placed at higher ranks, the nodes belonging to each node are expanded, and an a posteriori probability serving as the evaluation value of each expanded node is approximately calculated. In the fourth processing example, since an a posteriori probability serves as an evaluation value, it is possible to compare even the nodes of different steps and easily extract N nodes at higher ranks from the nodes.

The fifth example of pattern recognition processing of the information processing apparatus 11 will be described next.

The fifth processing example is a modification of the fourth processing example. The pattern recognition processing of the fifth example uses a method of searching for nodes whose evaluation values are placed at N higher ranks, like the fourth processing example. In the fifth processing example, processing of calculating a value obtained by dividing the a posteriori probability of each node by an estimated process time is performed as the node evaluation value calculation processing in each process described in the fourth processing example.

FIG. 20 is a flowchart for explaining the process sequence of the fifth example of pattern recognition processing of the information processing apparatus 11. Note that the processes in steps S90 to S95 and S97 to S100 in FIG. 20 are the same as in steps S70 to S75 and S77 to S80 of FIG. 19 described in the fourth processing example.

An image which is the target of pattern recognition processing supplied from the image input device 12 is input to the information processing apparatus 11 via the image interface 21 (step S90). When the image as the pattern recognition processing target is input via the image interface 21, the recognition control unit 30 in the pattern recognition unit 22a causes the candidate extraction unit 31 to extract image regions as word candidates from the input image (step S91). When the word candidate regions are extracted from the input image, the recognition control unit 30 stores the root node in a buffer on, e.g., the working memory 23 (step S92).

After storing the node in the buffer, the recognition control unit 30 extracts N nodes in descending order of evaluation value from the plurality of nodes stored in the buffer (step S93). When N nodes at higher ranks are extracted from the buffer, the recognition control unit 30 determines whether the nodes extracted from the buffer include a terminal node (step S94). If the N nodes extracted from the buffer include no terminal node (NO in step S94), the recognition control unit 30 causes the node expansion unit 32 to execute node expansion processing for each of the N extracted nodes (step S95). The node expansion processing obtains the nodes of an immediately lower layer belonging to each extracted node.

When the node expansion unit 32 obtains a plurality of nodes belonging to each extracted node, the evaluation value calculation unit 33 calculates the evaluation value of each obtained node (step S96). In the fifth processing example, a value obtained by dividing an a posteriori probability by an estimated process time is calculated as an evaluation value (steps S101 to S103).

More specifically, the evaluation value calculation unit 33 calculates the a posteriori probability of each node obtained by the node expansion unit 32 (step S101). The a posteriori probability of each node is approximately calculated by recognition processing of each node using the above-described calculation method.

When the a posteriori probability of each node is calculated, the evaluation value calculation unit 33 estimates the time necessary for processing each node (step S102). In this case, the process time required for recognition processing of a lower layer to which each node belongs is estimated. The process time can be estimated based on, e.g., the total number of characters of a word of a lower layer.

When the a posteriori probability and estimated process time of each node are obtained, the evaluation value calculation unit 33 calculates the evaluation value of each node by dividing the a posteriori probability of each node calculated in step S101 by the estimated process time calculated in step S102 (step S103).

When the evaluation value calculation unit 33 calculates the evaluation value of each expanded node by such a method, the recognition control unit 30 stores the nodes and their evaluation values in the buffer in association with each other (step S97). When the obtained nodes and their evaluation values are stored in the buffer, the recognition control unit 30 returns to step S93 to repeatedly execute the above-described processes. The processes in steps S93 to S97 are repeatedly executed until a terminal node to be employed as a recognition result is detected from the nodes extracted in step S93. As a result, a search tree which sequentially connects the nodes whose evaluation values are placed at N higher ranks is obtained.

Upon determining in step S94 that the nodes extracted from the buffer include a terminal node (YES in step S94), the recognition control unit 30 causes the determination unit 35 to determine whether the evaluation value of the terminal node is equal to or larger than a predetermined threshold (step S98). If the determination unit 35 determines that the evaluation value of the terminal node included in the N extracted nodes is equal to or larger than the predetermined threshold (YES in step S98), the recognition control unit 30 outputs, as the final recognition result, the entire pattern including the combination of the nodes specified by the terminal node (step S100).

As the fifth processing example, patterns based on all terminal nodes having evaluation value equal to or larger than the predetermined threshold may be output as the candidates of the final recognition result. This can be implemented by advancing the process to step S95 even when a terminal node having an evaluation value equal to or larger than the predetermined threshold is obtained in step S98. In this case, the processes in steps S93 to S99 are executed until the buffer becomes empty while accumulating terminal nodes having evaluation values equal to or larger than the predetermined threshold. The recognition control unit 30 outputs, as the final recognition results, a plurality of recognition results based on all terminal nodes having evaluation values equal to or larger than the predetermined threshold.

Upon determining that the evaluation value of the extracted terminal node is smaller than the predetermined threshold (NO in step S98), the recognition control unit 30 advances to step S95 to execute node expansion processing for the nodes except the terminal node. When the evaluation value of each node expanded by the node expansion processing is stored in the buffer (YES in step S99), the recognition control unit 30 returns to step S93 to extract N nodes whose evaluation values are placed as N higher ranks from the buffer, and executes the processes in step S93 to S97. If all the nodes extracted from the buffer are terminal nodes, and all the terminal nodes have evaluation values smaller than the predetermined threshold, the buffer stores no nodes. If the buffer is empty (YES in step S99), the recognition control unit 30 determines that no candidate having an evaluation value equal to or larger than the predetermined threshold is obtained, and finishes the processing.

As described above, according to the fifth processing example, an a posteriori probability is divided by an estimated process time to calculate the evaluation value of each node. In the fifth processing example, the nodes are narrowed to N candidates based on the evaluation values, thereby obtaining a terminal node having an evaluation value equal to or larger than a predetermined threshold as the final recognition result. In the fifth processing example, it is possible to efficiently narrow down the candidates of recognition results based on the evaluation value considering the process time.

## Claims

1. A pattern recognition method used in an information processing apparatus for performing processing of recognizing an entire pattern based on information obtained by recognition processing of a plurality of steps, **characterized by** comprising:

    expanding (S15, S35, S55, S75, S95) recognition candidates of a next step belonging to each recognition candidate, which are processing result candidates in recognition processing of each step;
    calculating (S16, S36, S56, S76, S96) an evaluation value of each expanded recognition candidate based on an a posteriori probability given a result of executed recognition processing;
    selecting (S18, S33, S53, S73, S93) recognition candidates based on the calculated evaluation value of each recognition candidate; and
    determining (S19-S21, S34-S40, S54-S60, S74-S80, S94-S100) a pattern recognition result based on the selected recognition candidates.

2. The method according to claim 1, **characterized in that**
    in selecting (S18) the recognition candidates, a predetermined number of recognition candidates are selected in descending order of evaluation value in each step.

3. The method according to claim 1, **characterized in that**
    in selecting (S33, S53) the recognition candidates, a recognition candidate having a maximum evaluation value is selected from the recognition candidates having the calculated evaluation values, and
    in expanding (S35, S55) the recognition candidates, the recognition candidates of the next step belonging to the selected recognition candidate having the maximum evaluation value are expanded.

4. The method according to claim 1, **characterized in that**
    in selecting (S73, S93) the recognition candidates, a predetermined number of recognition candidates are selected from the recognition candidates having the calculated evaluation values in descending order of evaluation value, and
    in determining (S74-S80, S94-S100) the recognition result,
    if the predetermined number of selected recognition candidates include a recognition candidate at an end without any recognition candidates of a next step, determining (S78, S98) whether an evaluation value of the recognition candidate at the end is not less than a predetermined threshold,
    if there is no recognition candidate at an end which has an evaluation value not less than the predetermined threshold, expanding (S75-S76, S95-S96) recognition candidates of a next step and calculating an evaluation value of each of the selected recognition candidates, and
    if there is a recognition candidate at an end which has an evaluation value not less than the predetermined threshold, selecting (S80, S100), as the recognition result of the entire pattern, a combination of recognition candidates of respective steps based on the recognition candidate at the end.

5. The method according to claim 3 or 4, **characterized by** further comprising:

    estimating (S62, S102) a time required for recognition processing of the recognition candidates of the subsequent steps belonging to each recognition candidate, and
in which in calculating (S63, S103) the evaluation value, the evaluation value is calculated based on the a posteriori probability and the estimated time required for recognition processing.

**6.** The method according to any one of claims 1 to 5, **characterized in that**
the a posteriori probability of each recognition candidate is calculated based on a probability that a recognition processing result for the recognition candidate will be output given the recognition candidate, a probability that a recognition processing result for the recognition result will be output, and an a posteriori probability of a recognition candidate of a step immediately before the recognition candidate.

**7.** The method according to any one of claims 1 to 5, **characterized in that**
the entire pattern to be recognized is character information formed from a combination of words of a plurality of layers, and
the recognition candidates of each step are word candidates of each layer.

**8.** A computer-readable storage medium storing a program for performing processing of recognizing an entire pattern based on information obtained by recognition processing of a plurality of steps, the program **characterized by** comprising:

a function of expanding (S15, S35, S55, S75, S95) recognition candidates of a next step belonging to each recognition candidate, which are processing result candidates in recognition processing of each step;
a function of calculating (S16, S36, S56, S76, S96) an evaluation value of each expanded recognition candidate based on an a posteriori probability given a result of executed recognition processing;
a function of selecting (S18, S33, S53, S73, S93) recognition candidates based on the calculated evaluation value of each recognition candidate; and
a function of determining (S19-S21, S34-S40, S54-S60, S74-S80, S94-S100) a pattern recognition result based on the selected recognition candidates.

**9.** The medium according to claim 8, **characterized in that**
in the function of selecting (S18) the recognition candidates selects a predetermined number of recognition candidates in descending order of evaluation value in each step.

**10.** The medium according to claim 8,
**characterized in that**
the function of selecting (S33, S53) the recognition candidates selects a recognition candidate having a maximum evaluation value from the recognition candidates having the calculated evaluation values, and
the function of expanding (S35, S55) the recognition candidates expands the recognition candidates of the next step belonging to the selected recognition candidate having the maximum evaluation value.

**11.** The medium according to claim 8,
**characterized in that**
the function of selecting (S73, S93) the recognition candidates selects a predetermined number of recognition candidates from the recognition candidates having the calculated evaluation values in descending order of evaluation value, and
the function of determining (S74-S80, S94-S100) the recognition result
determines (S78, S98), if the predetermined number of selected recognition candidates include a recognition candidate at an end without any recognition candidates of a next step, whether an evaluation value of the recognition candidate at the end is not less than a predetermined threshold,
if there is no recognition candidate at an end which has an evaluation value not less than the predetermined threshold, expands (S75-S76, S95-S96) recognition candidates of a next step and calculates an evaluation value of each of the selected recognition candidates, and
if there is a recognition candidate at an end which has an evaluation value not less than the predetermined threshold, selects (S80, S100), as the recognition result of the entire pattern, a combination of recognition candidates of respective steps based on the recognition candidate at the end.

**12.** The medium according to claim 10 or 11, **characterized by** further comprising:

estimating (S62, S102) a time required for recognition processing of the recognition candidates of the subsequent steps belonging to each recognition candidate, and
the function of calculating (S63, S103) the evaluation value calculates the evaluation value based on the a posteriori probability and the estimated time required for recognition processing.

**13.** The medium according to any one of claims 8 to 12, **characterized in that**
the a posteriori probability of each recognition candidate is calculated based on a probability that a recognition processing result for the recognition candidate will be output given the recognition candidate, a probability that a recognition processing result for the recognition result will be output, and an a posteriori probability of a recognition candidate of a step immediately before the recognition candidate.

**14.** The medium according to any one of claims 8 to 12, **characterized in that**
the entire pattern to be recognized is character information formed from a combination of words of a plurality of layers, and
the recognition candidates of each step are word candidates of each layer.

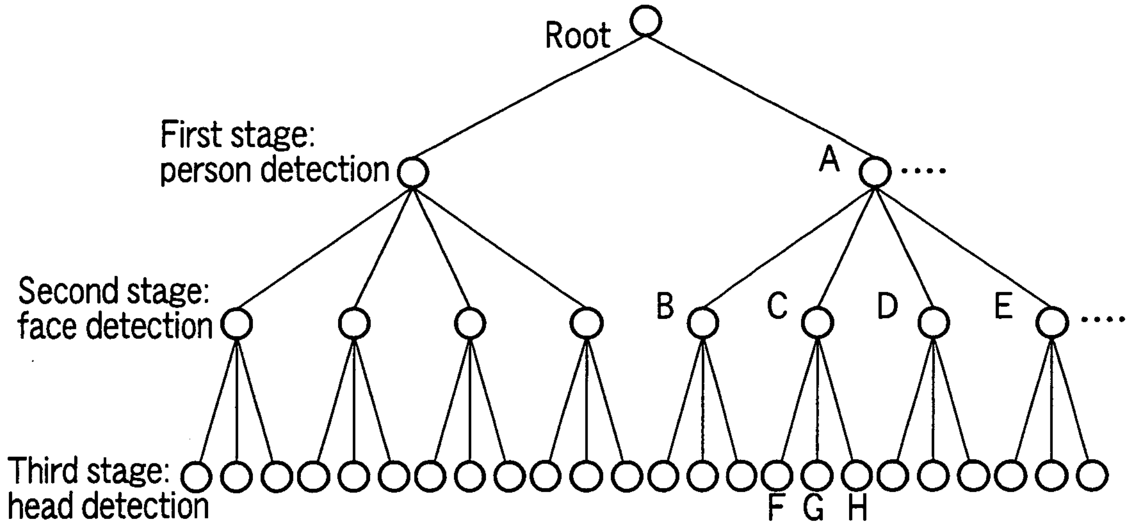
Root
First stage:
person detection
A
Second stage:
face detection
B
C
D
E
Third stage:
head detection
F
G
H

F I G. 1

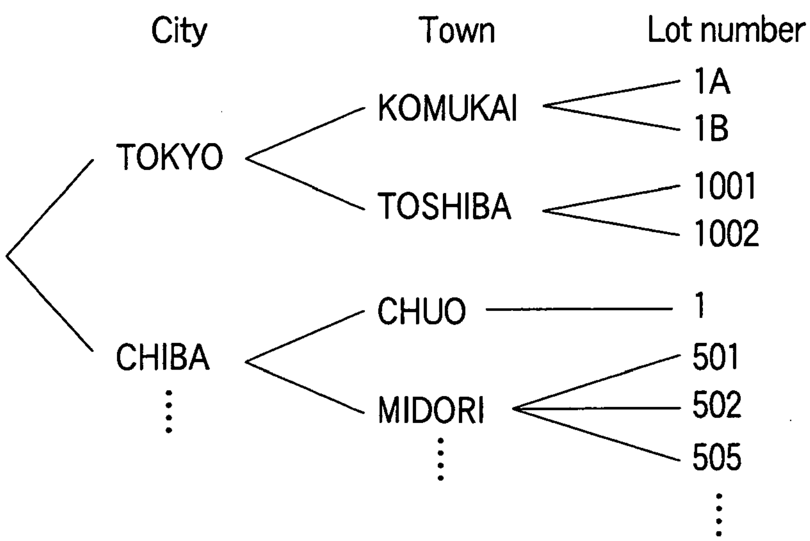
City
Town
Lot number
TOKYO
KOMUKAI
1A
1B
TOSHIBA
1001
1002
CHIBA
CHUO
1
MIDORI
501
502
505

F I G. 2

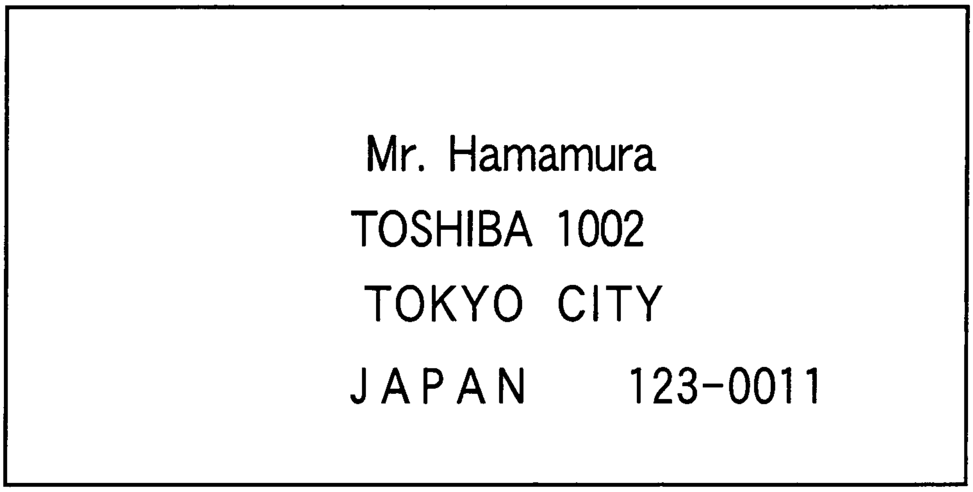
Mr. Hamamura
TOSHIBA 1002
TOKYO CITY
JAPAN 123-0011

FIG. 3

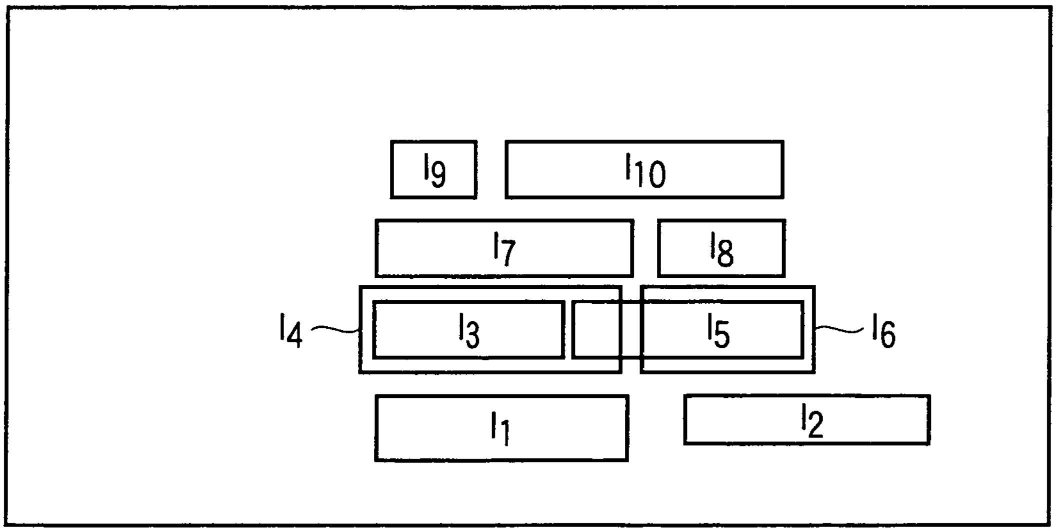
l9
l10
l7
l8
l4
l3
l5
l6
l1
l2

FIG. 4

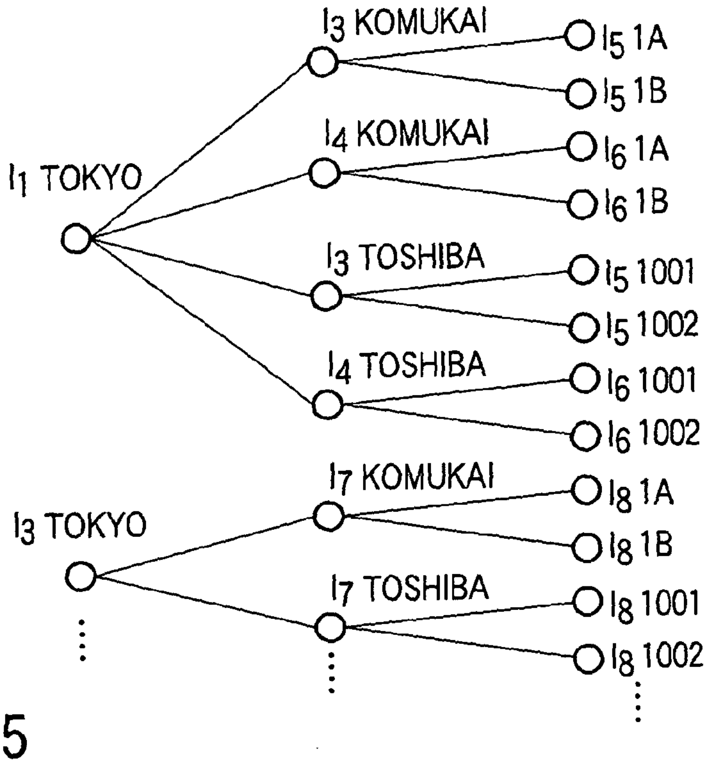
I1 TOKYO
I3 KOMUKAI
I4 KOMUKAI
I3 TOSHIBA
I4 TOSHIBA
I5 1A
I5 1B
I6 1A
I6 1B
I5 1001
I5 1002
I6 1001
I6 1002
I3 TOKYO
I7 KOMUKAI
I7 TOSHIBA
I8 1A
I8 1B
I8 1001
I8 1002

FIG. 5

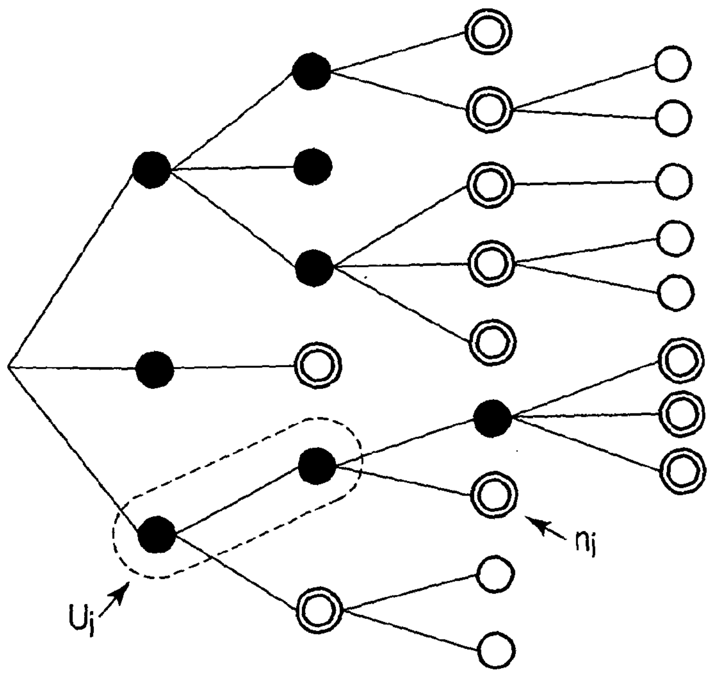
Uj
nj

FIG. 6

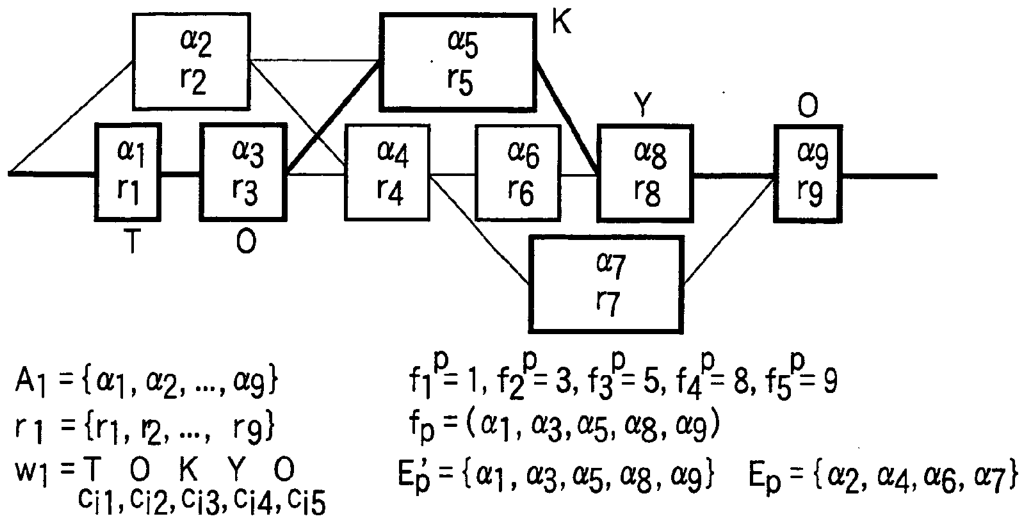
α2
r2
α5
r5
K
Y
O
α1
r1
α3
r3
α4
r4
α6
r6
α8
r8
α9
r9
T
O
α7
r7
A1 = {α1, α2, ..., α9}
r1 = {r1, r2, ..., r9}
w1 = T O K Y O
ci1, ci2, ci3, ci4, ci5
f1p = 1, f2p = 3, f3p = 5, f4p = 8, f5p = 9
fp = (α1, α3, α5, α8, α9)
E'p = {α1, α3, α5, α8, α9} Ep = {α2, α4, α6, α7}

FIG. 7

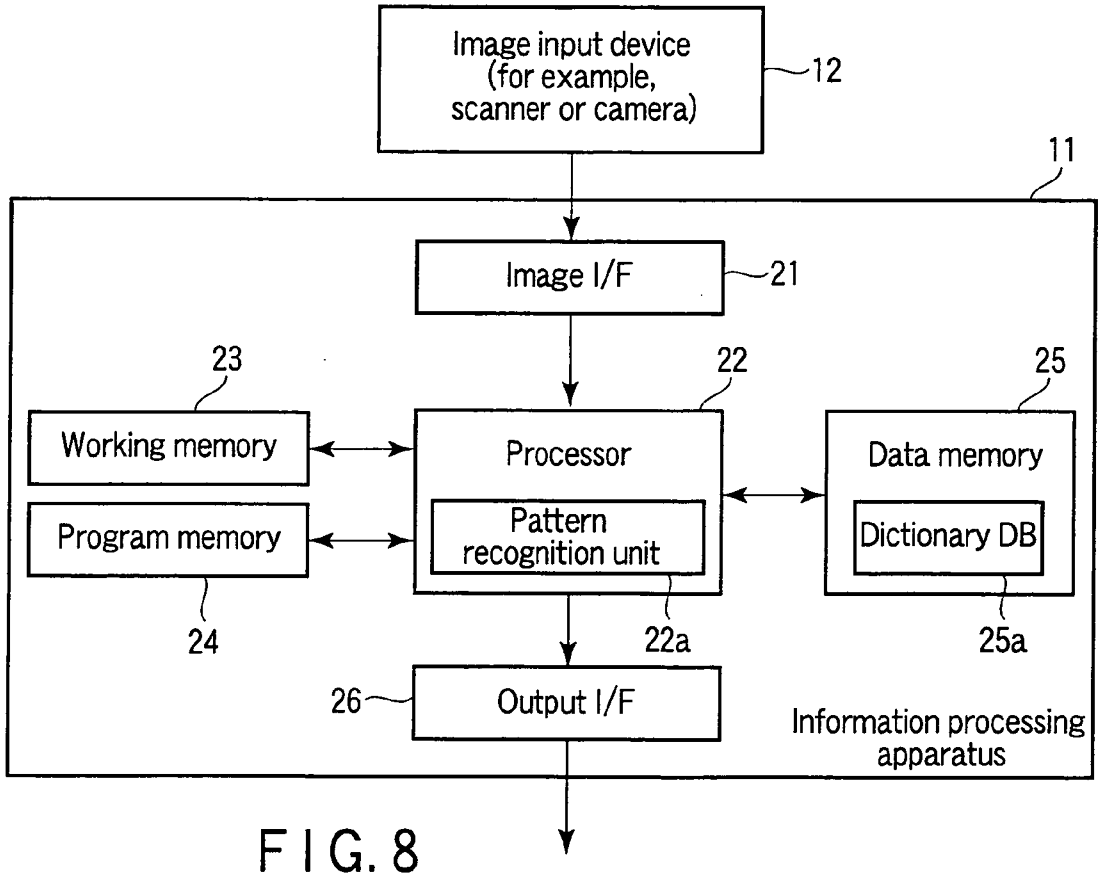
Image input device
(for example,
scanner or camera)
12
11
Image I/F
21
23
22
25
Working memory
Processor
Data memory
Program memory
Pattern
recognition unit
Dictionary DB
24
22a
25a
26
Output I/F
Information processing
apparatus

FIG. 8

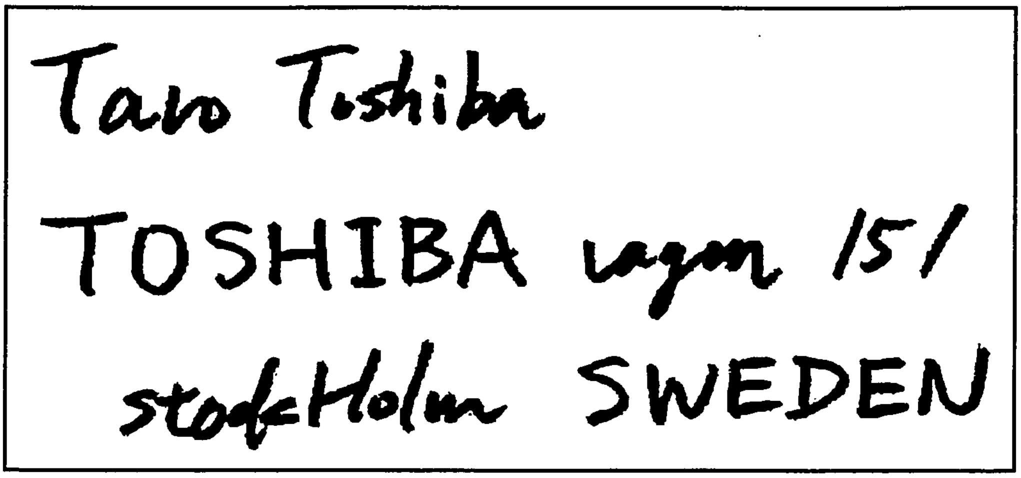
Taro Toshiba
TOSHIBA vagen 15/
stockHolm SWEDEN

FIG. 9

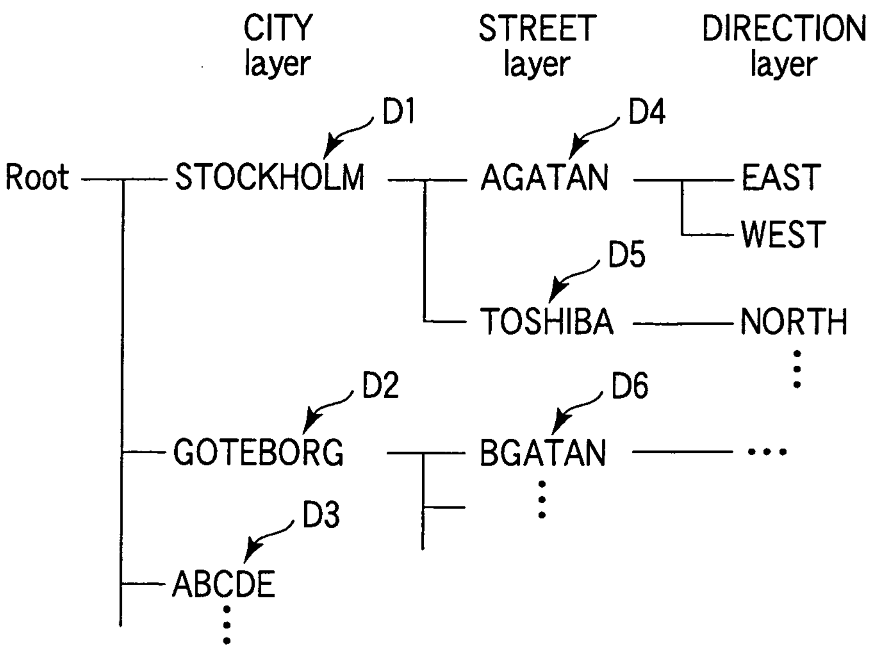
CITY layer
STREET layer
DIRECTION layer
D1
D4
Root
STOCKHOLM
AGATAN
EAST
WEST
D5
TOSHIBA
NORTH
D2
D6
GOTEBORG
BGATAN
D3
ABCDE

FIG. 10

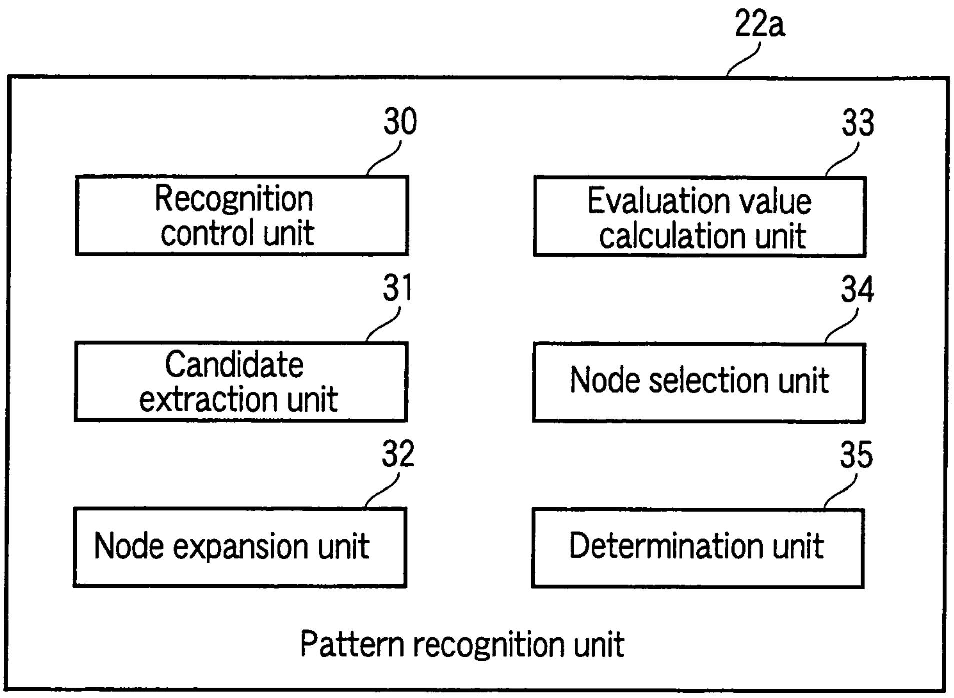
22a
30
Recognition control unit
33
Evaluation value calculation unit
31
Candidate extraction unit
34
Node selection unit
32
Node expansion unit
35
Determination unit
Pattern recognition unit

F I G. 11

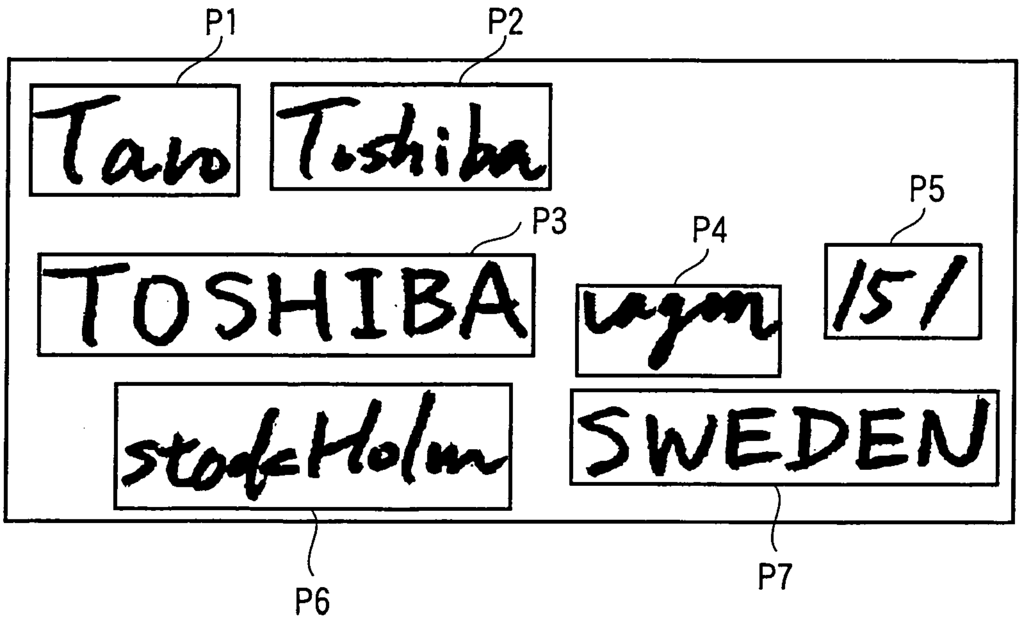
P1
P2
Taro
Toshiba
P3
P4
P5
TOSHIBA
/5/
SWEDEN
P6
P7

F I G. 12

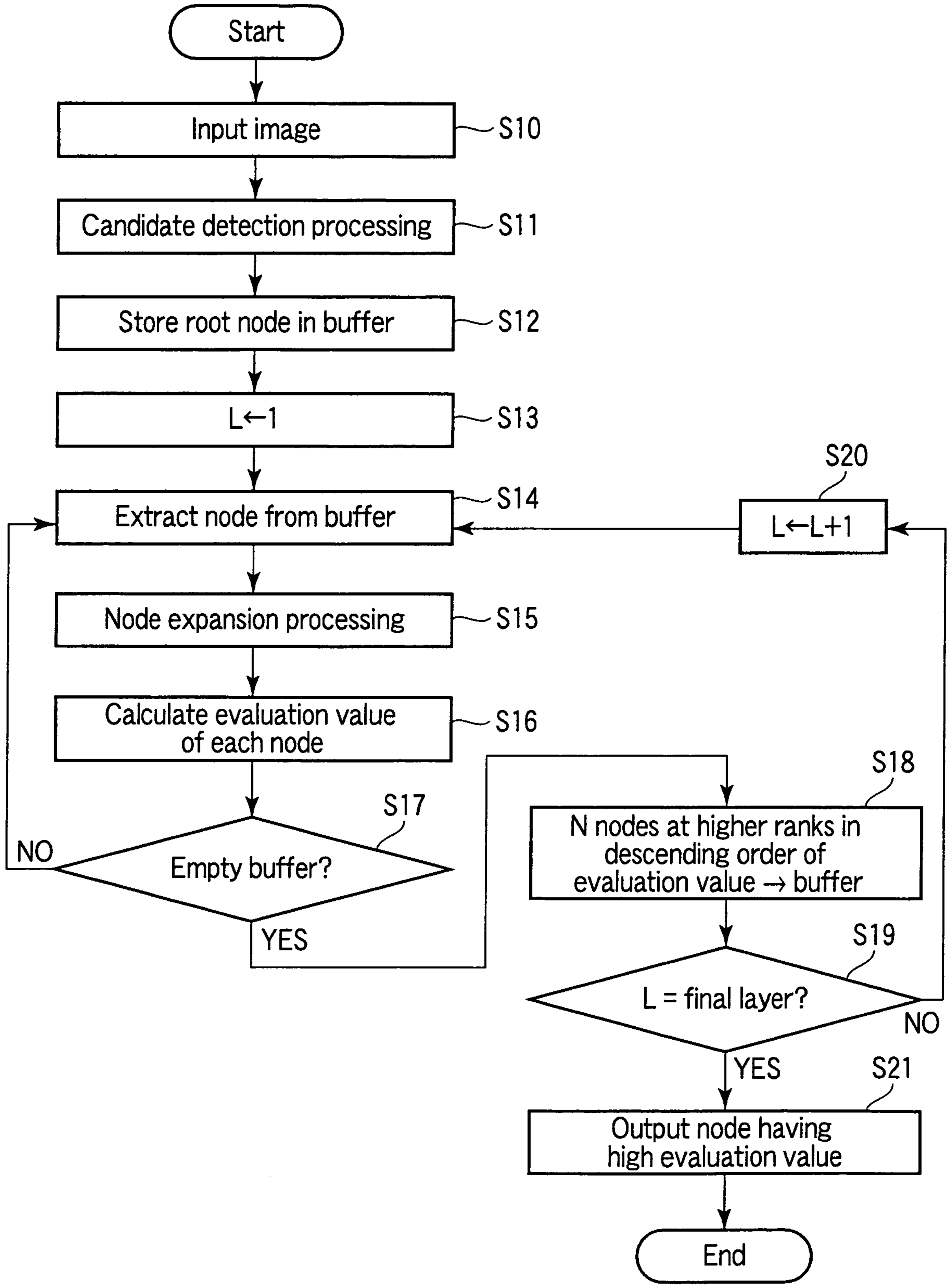
Start
Input image
S10
Candidate detection processing
S11
Store root node in buffer
S12
L←1
S13
Extract node from buffer
S14
S20
L←L+1
Node expansion processing
S15
Calculate evaluation value of each node
S16
S17
Empty buffer?
NO
YES
S18
N nodes at higher ranks in descending order of evaluation value → buffer
S19
L = final layer?
NO
YES
S21
Output node having high evaluation value
End

F I G. 13

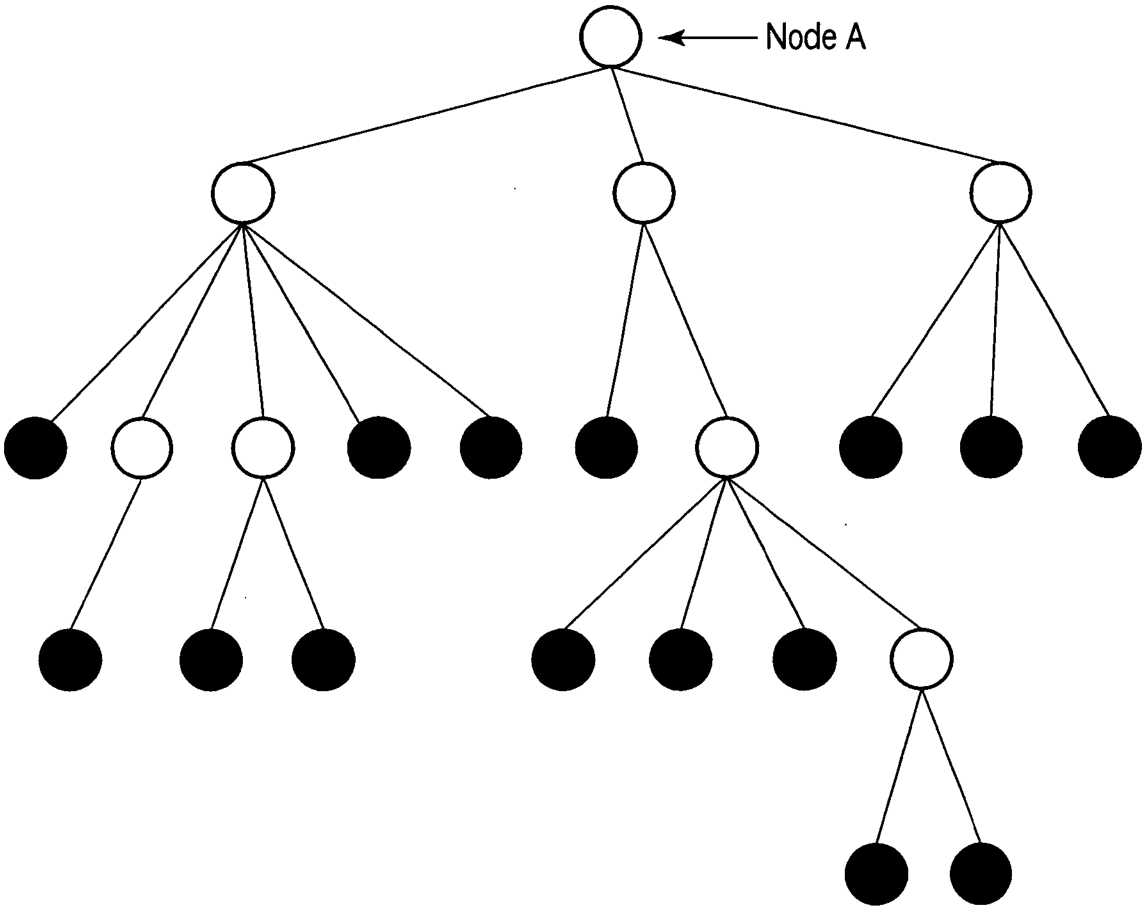


FIG. 14

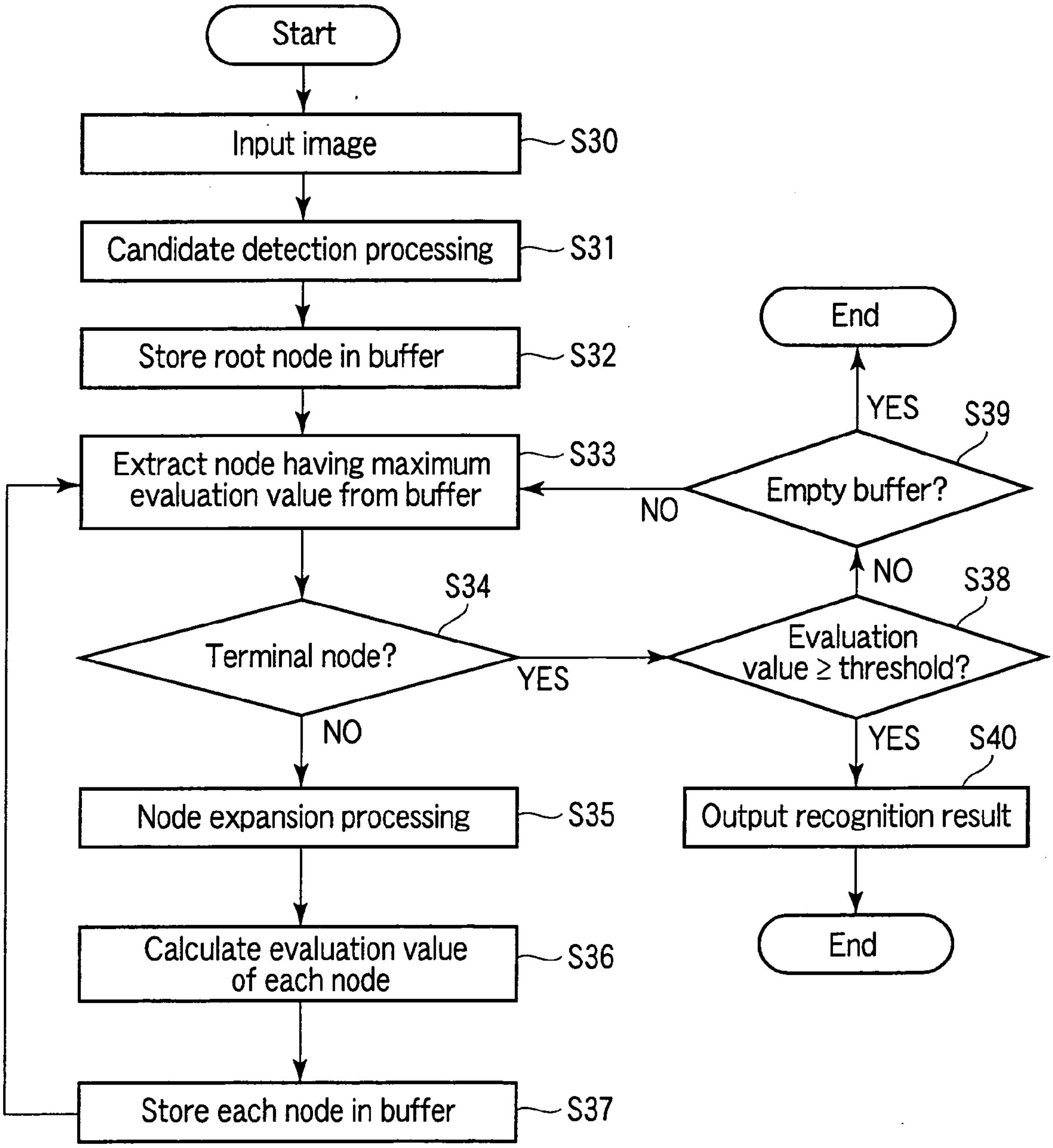
Start
Input image
S30
Candidate detection processing
S31
Store root node in buffer
S32
Extract node having maximum evaluation value from buffer
S33
Terminal node?
S34
YES
NO
Node expansion processing
S35
Calculate evaluation value of each node
S36
Store each node in buffer
S37
End
YES
S39
Empty buffer?
NO
NO
S38
Evaluation value ≥ threshold?
YES
S40
Output recognition result
End

F I G. 15

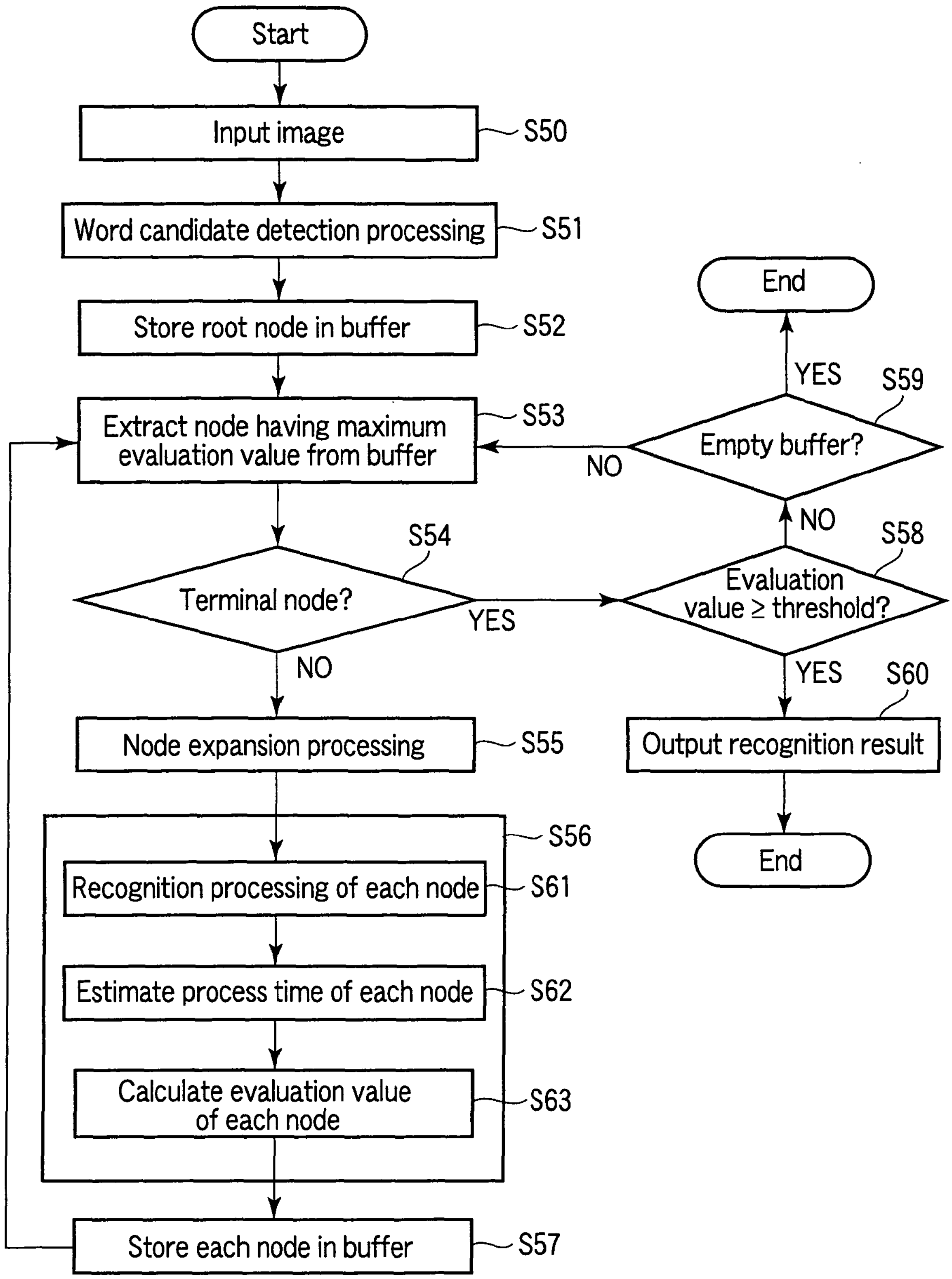
Start
Input image
S50
Word candidate detection processing
S51
Store root node in buffer
S52
Extract node having maximum evaluation value from buffer
S53
Terminal node?
S54
YES
NO
Node expansion processing
S55
S56
Recognition processing of each node
S61
Estimate process time of each node
S62
Calculate evaluation value of each node
S63
Store each node in buffer
S57
Evaluation value ≥ threshold?
S58
NO
Empty buffer?
S59
YES
End
NO
YES
S60
Output recognition result
End

F I G. 16

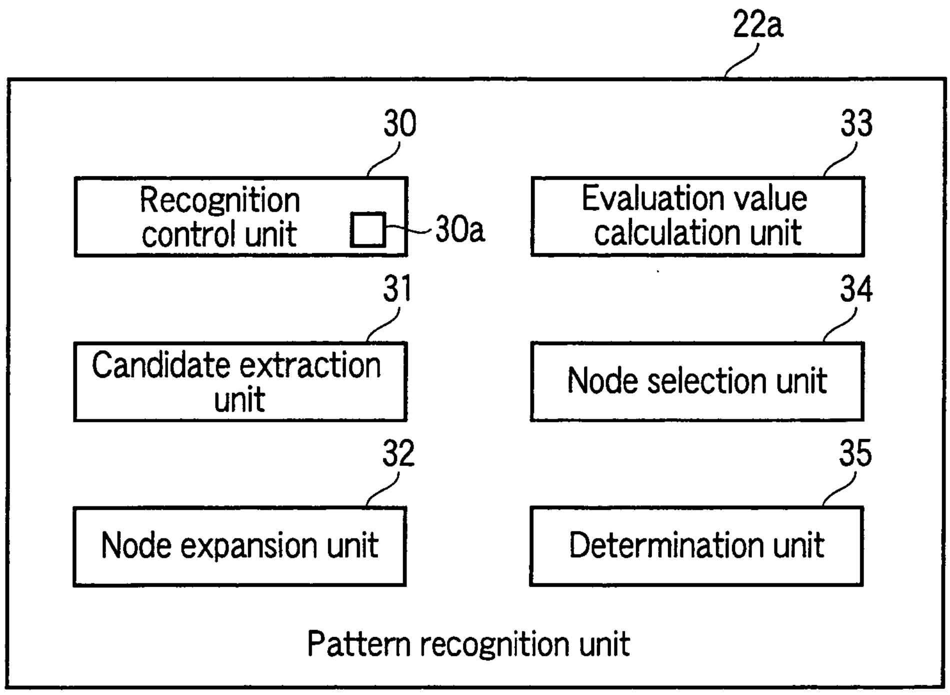
22a
30
33
Recognition control unit
30a
Evaluation value calculation unit
31
34
Candidate extraction unit
Node selection unit
32
35
Node expansion unit
Determination unit
Pattern recognition unit

F I G. 17

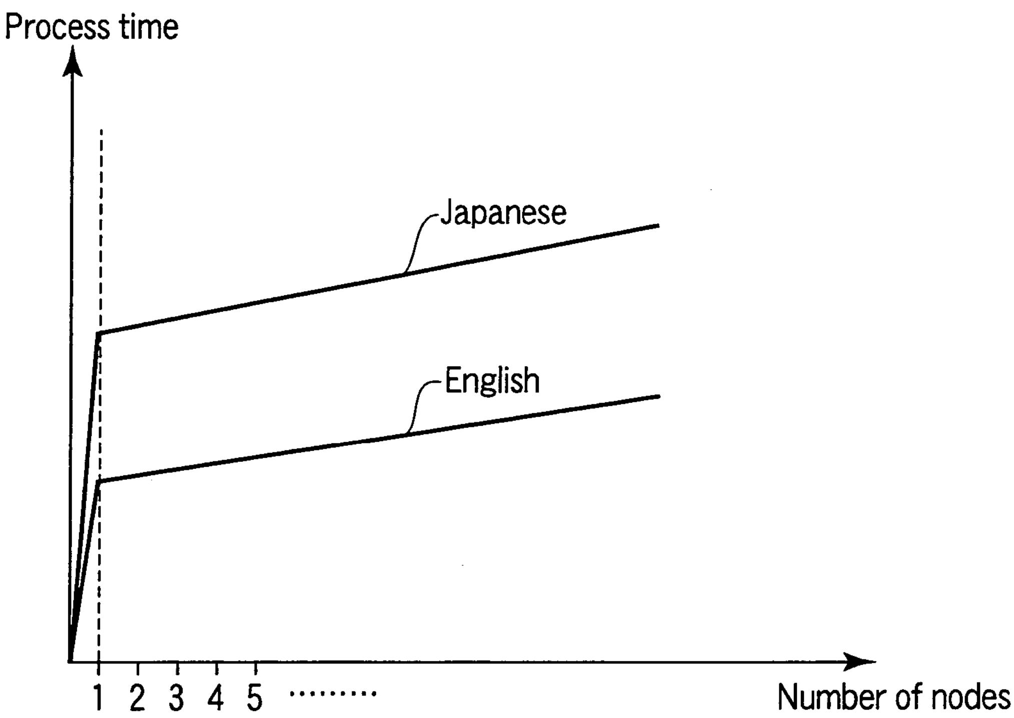
Process time
Japanese
English
1 2 3 4 5 .........
Number of nodes

F I G. 18

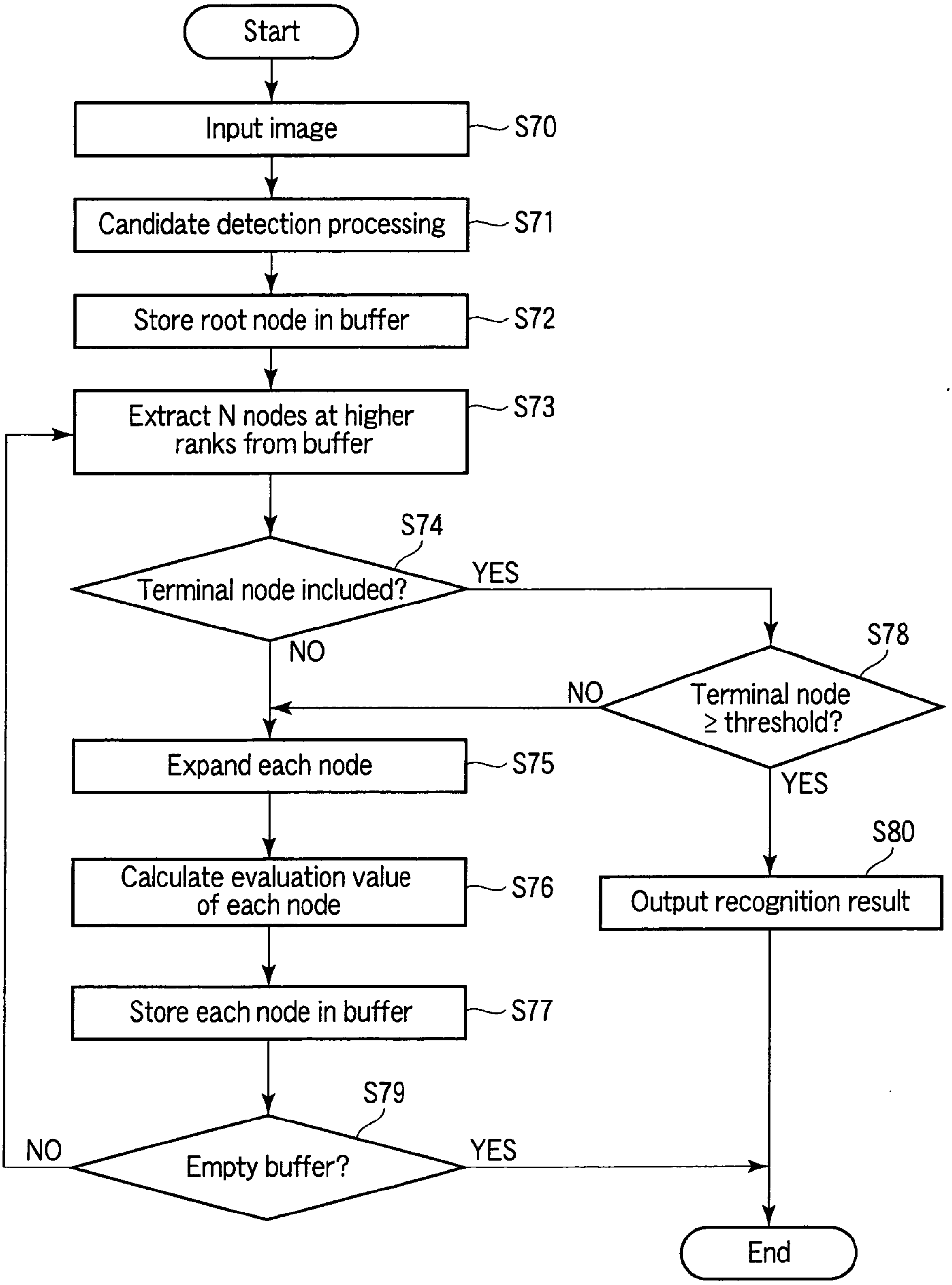
Start
Input image
S70
Candidate detection processing
S71
Store root node in buffer
S72
Extract N nodes at higher ranks from buffer
S73
S74
Terminal node included?
YES
NO
S78
Terminal node ≥ threshold?
NO
YES
Expand each node
S75
Calculate evaluation value of each node
S76
Store each node in buffer
S77
S80
Output recognition result
S79
Empty buffer?
NO
YES
End

FIG. 19

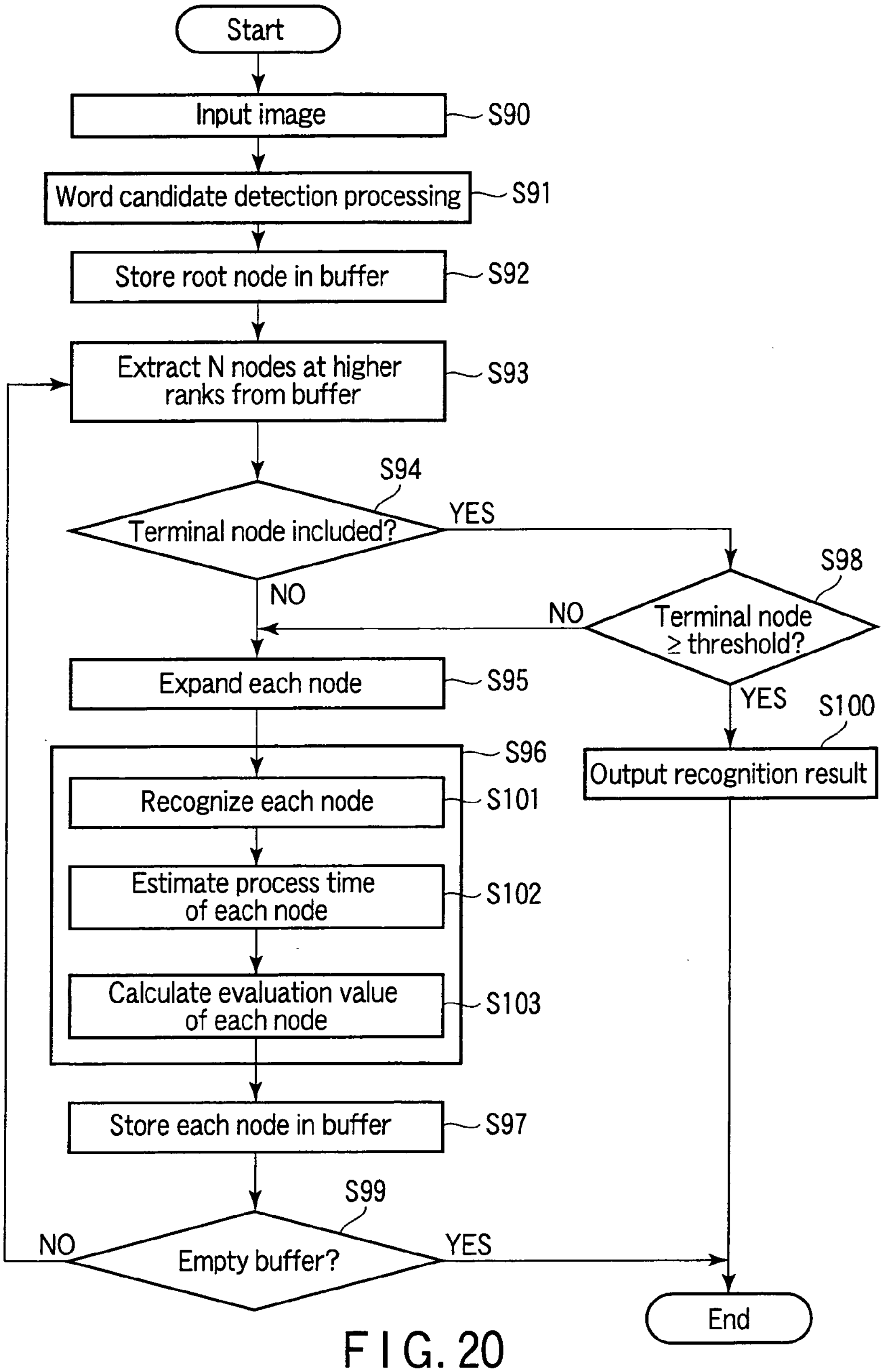
Start
Input image
S90
Word candidate detection processing
S91
Store root node in buffer
S92
Extract N nodes at higher ranks from buffer
S93
S94
Terminal node included?
YES
NO
S98
Terminal node ≥ threshold?
NO
YES
S100
Expand each node
S95
S96
Output recognition result
Recognize each node
S101
Estimate process time of each node
S102
Calculate evaluation value of each node
S103
Store each node in buffer
S97
S99
NO
Empty buffer?
YES
End

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004178280 A
- JP 2001283156 A


### Non-patent literature cited in the description


- *IEEE Trans. Pattern Analysis and Machine Intelligence,* January 1989, vol. 11 (1), 68-83
- **Tomoyuki Hamamura ; Takuma Akagi ; Hiroyuki Mizutani ; Bunpei Irie.** Word Marching Using Bayes Estimation Based on Normalized Word Length. *Image Recognition/Understanding Symposium (MIRU2000) lecture transactions II,* July 2000, 1-6
- **Tomoyuki Hamamura ; Takuma Akagi ; Bunpei Irie.** An Evaluation Function Based on a Posteriori Probability for Word Recognition. *Technical Report of IEICE, PRMU2006-92,* October 2006
- **Tomoyuki Hamamura ; Takuma Akagi ; Bunpei Irie.** An Analytic Word Recognition Algorithm Using a Posteriori Probability - Normalization of the Number of Segmentation Candidates. *Technical Report of IEICE, PRMU2006-238,* May 2007